(19) Europäisches Patentamt
European Patent Office
Office européen des brevets

(11) EP 2 149 579 B1

(12) **EUROPÄISCHE PATENTSCHRIFT**

(45) Veröffentlichungstag und Bekanntmachung des Hinweises auf die Patenterteilung:
**07.09.2011 Patentblatt 2011/36**

(51) Int Cl.:
***C07F 7/18*** *(2006.01)*

(21) Anmeldenummer: **09166242.9**

(22) Anmeldetag: **23.07.2009**

(54) **Verfahren zur Herstellung von Organosilanen**

Method for making organosilanes

Procédé de fabrication d'organosilanes

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **31.07.2008 DE 102008035623**

(43) Veröffentlichungstag der Anmeldung:
**03.02.2010 Patentblatt 2010/05**

(73) Patentinhaber: **Evonik Degussa GmbH**
**45128 Essen (DE)**

(72) Erfinder:
- **Korth, Karsten**
  **79639 Grenzach-Wyhlen (DE)**
- **Kiefer, Ingo**
  **79739 Schwörstadt-Dossenbach (DE)**
- **Alig, Alfred**
  **63826 Geiselbach-Omersbach (DE)**
- **Deschler, Ulrich**
  **63877 Sailauf (DE)**
- **Dröge, Helmut**
  **53332 Bornheim (DE)**
- **Koenigstein, Stefan**
  **44793 Bochum (DE)**
- **Schwan, Stephanie**
  **63225 Langen (DE)**

(56) Entgegenhaltungen:
**EP-A- 1 700 861 WO-A-2008/025580**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Herstellung von Organosilanen.

Aus EP 1130023 ist die Herstellung von Organosilylalkylpolysulfanen der allgemeinen Formel $(R^1R^2R^3Si-R^4-)_2S_q$ aus dem Organosilylalkylhalogenid der allgemeinen Formel $R^1R^2R^3Si-R^4-X$ bekannt. Die Umsetzung wird durchgeführt, indem in einem polaren organischen Lösungsmittel elementarer Schwefel und das Organylalkylhalogenid vorgelegt und zu dieser Suspension wasserfreies bzw. nahezu wasserfreies ionisches Sulfid gegeben wird. Wegen der Hydrolyseanfälligkeit der Si-Alkoxy-Bindungen des Organosilylalkylhalogenids müssen die ionischen Sulfide wasserfrei bzw. nahezu wasserfrei sein.

Aus EP 1700861 ist bekannt, schwefelhaltige Alkoxysilane unter Verwendung von wasserhaltigen Schwefelungsreagentien in Alkohol zu synthetisieren. Bei der Verwendung von unterschiedlichen Rohstoffen werden große Unterschiede im Monomergehalt der erhaltenen polysulfidischen Alkoxysilane festgestellt. Eine verlässliche, gleichmäßige Produktqualität im industriellen Maßstab lässt sich so nicht erzielen. Zudem ist der Einsatz von vier Feststoffen in dem bekannten Verfahren nachteilig für den industriellen Maßstab.

Aus WO 2008025580 A1 ist bekannt, schwefelhaltige Alkoxysilane der allgemeinen Formel $[R(R)(R'O)Si-R''-]_2S_m$ herzustellen, wobei der Alkalihydroxidgehalt aller Einsatzstoffe < 0,44 Gew.-% sein muss.

Nachteile der bekannten Verfahren sind entweder der Einsatz von wasserfreien bzw. nahezu wasserfreien Ausgangsstoffen oder bei wasserhaltigen Ausgangsstoffen die starke Abhängigkeit der Produkteigenschaften von den Rohstoffeigenschaften, insbesondere dem Anteil von Alkalihydroxiden. Unerwünscht ist bei den bekannten Verfahren, die wasserhaltige Schwefelungsreagentien verwenden, der Einsatz von mehr als 4 Rohstoffen. Zudem sind die Dosierung und der Einsatz von Alkalisulfid-Hydrat als Schwefelungsrohstoff problematisch, da feste Alkalisulfid-Hydrate, durch die Herstellung bedingt, größere Mengen an Alkalihydroxiden enthalten können. Ein niedriger Gehalt von (Mercaptoorganyl) alkyoxysilan im Endprodukt ist erwünscht.

Aufgabe der vorliegenden Erfindung ist es, ein Verfahren zur Herstellung von polysulfidischen Organosilanen zur Verfügung zu stellen, das hohe Umsätze bei guten Selektivitäten ermöglicht, auf den Einsatz von festem Alkalisulfid-Hydrat verzichtet und Alkalihydroxid in dem Schwefelungsrohstoff toleriert.

Gegenstand der Erfindung ist ein Verfahren zur Herstellung von Organosilanen der allgemeinen Formel I,

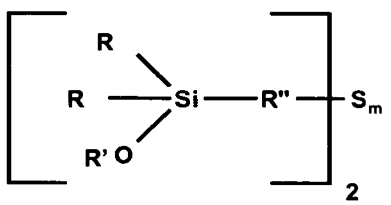

I

wobei

R gleich oder verschieden und eine $C_1$-$C_8$ -Alkyl-, vorzugsweise $CH_3$ oder $CH_2CH_3$, $C_1$-$C_8$ -Alkenyl-, $C_1$-$C_8$ - Aryl-, $C_1$-$C_8$ -Aralkylgruppe oder eine OR' Gruppe ist,

R' gleich oder verschieden und eine $C_1$-$C_{24}$ -, vorzugsweise $C_1$-$C_4$ - oder $C_{12}$-$C_{18}$ -, besonders bevorzugt $CH_2CH_3$, verzweigte oder unverzweigte einbindige Alkyl- oder Alkenyl-Gruppe, eine Arylgruppe, eine Aralkylgruppe, ein Wasserstoff (-H), eine Alkylethergruppe $-(CR^{III}_2)_{y'}-O-Alk$ mit y' = 1-20, bevorzugt 2-10, besonders bevorzugt 2-5, oder eine Alkylpolyethergruppe - $(CR^{III}_2O)_y$-Alk oder - $(CR^{III}_2-CR^{III}_2-O)_y$-Alk, mit y = 2-20, bevorzugt 2-10, besonders bevorzugt 2-5,

$R^{III}$ unabhängig voneinander H oder eine Alkylgruppe, vorzugsweise $CH_3$-Gruppe, ist und Alk eine verzweigte oder unverzweigte, gesättigte oder ungesättigte, aliphatische, aromatische oder gemischt aliphatische /aromatische einbindige $C_1$-$C_{30}$ -, bevorzugt $C_2$-$C_{20}$ -, besonders bevorzugt $C_6$-$C_{18}$ -, ganz besonders bevorzugt $C_{10}$-$C_{18}$ -, Kohlenwasserstoffgruppe ist, ist,

R'' eine verzweigte oder unverzweigte, gesättigte oder ungesättigte, aliphatische, aromatische oder gemischt aliphatische /aromatische zweibindige $C_1$-$C_{30}$ -, bevorzugt $C_1$-$C_{20}$ -, besonders bevorzugt $C_1$-$C_{10}$ -, ganz besonders bevorzugt $C_1$-$C_7$ -, Kohlenwasserstoffgruppe, die gegebenenfalls mit F-, Cl-, Br-, I-, HS-, $NH_2$-, oder NHR' substituiert ist, ist und

m eine mittlere Schwefelkettenlänge von 1,5 bis 4,5, bevorzugt 2 bis 2,6 und 3,5 bis 3,9, besonders bevorzugt 2,1 bis 2,3 und 3,6 bis 3,8, ist, durch Umsetzung von (Halogenorganyl)alkoxysilan der Formel II,

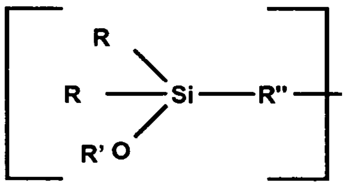

II

wobei R, R' und R" die oben angegebenen Bedeutungen haben und Hal Chlor, Brom, Fluor oder Iod ist, mit wasserhaltigem Alkalihydrogensulfid, Schwefel und Alkalicarbonat in Alkohol, welches dadurch gekennzeichnet ist, dass das molare Verhältnis von (Halogenorganyl)alkoxysilan der Formel II zu Alkalihydrogensulfid zwischen 1:0,45 und 1:0,75, vorzugsweise zwischen 1:0,45 und 1:0,65, besonders bevorzugt zwischen 1:0,5 und 1:0,6, ganz besonders bevorzugt zwischen 1:0,5 und 1:0,55, ist und das molare Verhältnis Alkalihydrogensulfid zu Alkalicarbonat zwischen 1:0,5 und 1:1,5, vorzugsweise zwischen 1:0,65 und 1:1,3, besonders bevorzugt zwischen 1:0,85 und 1:1,2, ganz besonders bevorzugt zwischen 1:0,95 und 1:1,1, ist.

R" kann $-CH_2-$, $-CH_2CH_2-$, $_CH_2CH_2CH_2-$, $-CH_2CH_2CH_2CH_2-$, $-CH(CH_3)-$, $-CH_2CH(CH_3)-$, $-CH(CH_3)CH_2-$, $-C(CH_3)_2-$, $-CH(C_2H_5)-$, $-CH_2CH_2CH(CH_3)-$, $-CH_2CH(CH_3)CH_2-$ oder

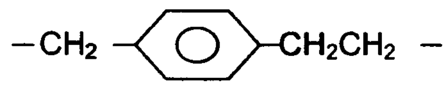

bedeuten.

Überraschenderweise wird gefunden, dass das in den Schwefelungsreagenzien enthaltene Wasser zu keiner vollständigen Hydrolyse und Kondensation der Alkoxysilane führt, obwohl basische Reaktionsbedingungen vorliegen und stöchiometrisch mehr Wasser vorliegt als benötigt wird, um alle vorhandenen SiOR in SiOH und in der Folge durch Kondensation in entsprechende Si-O-Si-Bindungen enthaltende Siloxane umzuwandeln.

Es können bei dem erfindungsgemäßen Verfahren zur Herstellung von Organosilanen Verbindungen der allgemeinen Formel I oder auch Mischungen aus Verbindungen der allgemeinen Formel I entstehen.

Mischungen aus Organosilanen der Formel I können mehr als 50 Gew.-%, bevorzugt mehr als 60 Gew.-%, besonders bevorzugt mehr als 70 Gew.-%, ganz besonders bevorzugt mehr als 80 Gew.-%, Organosilane der Formel I mit $-S_2$-Einheiten enthalten.

Bevorzugt können Mischungen aus Organosilanen der Formel I 50 bis 100 Gew.-%, bevorzugt 60 bis 95 Gew.-%, besonders bevorzugt 70 bis 95 Gew.-%, ganz besonders bevorzugt 75 bis 90 Gew.-%, Organosilane der Formel I mit $-S_2-$ Einheiten enthalten.

Mischungen aus Organosilanen der Formel I können weniger als 60 Gew.-%, bevorzugt weniger als 45 Gew.-%, besonders bevorzugt weniger 35 Gew.-%, ganz besonders bevorzugt weniger als 25 Gew.-%, Organosilane der Formel I mit $-S_3-$ Einheiten enthalten.

Bevorzugt können Mischungen aus Organosilanen der Formel I bis zu 60 Gew.-%, bevorzugt 5 bis 45 Gew.-%, besonders bevorzugt 8 bis 35 Gew.-%, ganz besonders bevorzugt 10 bis 25 Gew.-%, Organosilane der Formel I mit $-S_3-$ Einheiten enthalten.

Mischungen aus Organosilanen der Formel I können weniger als 50 Gew.-%, bevorzugt weniger als 30 Gew.-%, besonders bevorzugt weniger 20 Gew.-%, ganz besonders bevorzugt weniger als 10 Gew.-%, Organosilane der Formel I mit $-S_4-$ Einheiten enthalten.

Die bei dem erfindungsgemäßen Verfahren entstehenden Verbindungen der allgemeinen Formel I oder die Mischungen aus Verbindungen der allgemeinen Formel I können einen Wassergehalt von kleiner 2 Gew.-%, bevorzugt kleiner 1 Gew.-%, besonders bevorzugt kleiner 0,5 Gew.-%, ganz besonders bevorzugt kleiner als 0,1 Gew.-%, haben. Der Wassergehalt wird nach DIN ENISO 12937 inklusive einer iodometrischer Rücktitration um $H_2O$- und HS-Spezies ($H_2S$ etc.) unterscheiden zu können gemessen.

Die Alkylpolyethergruppe (R') in Formel I und II kann Ethylenoxid- ($CH_2-CH_2-O$) und Propylenoxid-Einheiten, beispielsweise ($CH(CH_3)-CH_2-O$) oder ($CH_2-CH(CH_3)-O$), enthalten.

Die Alkylpolyethergruppe $-(CR^{III}_2O)_y$-Alk oder $-(_{CR}{}^{111}{}_2-CR^{III}_2O)_y$-Alk in Formel I und II kann sein
$-(CH_2CH_2O)_2-C_8H_{17}$, $-(CH_2-CH_2O)_3-C_8H_{17}$, $-(CH_2-CH_2O)_4-C_8H_{17}$, $-(CH_2-CH_2O)_5-C_8H_{17}$, $-(CH_2-CH_2O)_6-C_8H_{17}$, $-(CH_2-CH_2O)_7-C_8H_{17}$,

$-(CH(CH_3)-CH_2O)_2-C_8H_{17}$, $-(CH(CH_3)-CH_2O)_3-C_8H_{17}$, $-(CH(CH_3)-CH_2O)_4-C_8H_{17}$, $-(CH(CH_3)-CH_2O)_5-C_8H_{17}$, $-(CH(CH_3)-CH_2O)_6-C_8H_{17}$, $-(CH(CH_3)-CH_2O)_7-C_8H_{17}$,
$-(CH_2-CH_2O)_2-C_9H_{19}$, $-(CH_2-CH_2O)_3-C_9H_{19}$, $-(CH_2-CH_2O)_4-C_9H_{19}$, $-(CH_2-CH_2O)_2-C_9H_{19}$, $-(CH_2-CH_2O)_6-C_9H_{19}$, $-(CH_2-CH_2O)_7-C_9H_{19}$,
$-(CH(CH_3)-CH_2O)_2-C_9H_{19}$, $-(CH(CH_3)-CH_2O)_3-C_9H_2O$, $-(CH(CH_3)-CH_2O)_4-C_9H_{19}$, $-(CH(CH_3)-CH_2O)_5-C_9H_{19}$, $-(CH(CH_3)-CH_2O)_6-C_9H_{19}$, $-(CH(CH_3)-CH_2O)_7-C_9H_{19}$,
$-(CH_2-CH_2O)_2-C_{10}H_{21}$, $-(CH_2-CH_2O)_3-C_{10}H_{21}$, $-(CH_2-CH_2O)_4-C_{10}H_{21}$, $-(CH_2-CH_2O)_5-C_{10}H_{21}$, $-(CH_2-CH_2O)_6-C_{10}H_{21}$, $-(CH_2-CH_2O)_7-C_{10}H_{21}$,
$-(CH(CH_3)-CH_2O)_2-C_{10}H_{21}$, $-(CH(CH_3)-CH_2O)_3-C_{10}H_{21}$, $-(CH(CH_3)-CH_2O)_4-C_{10}H_{21}$, $-(CH(CH_3)-CH_2O)_5-C_{10}H_{21}$, $-(CH(CH_3)-CH_2O)_6-C_{10}H_{21}$, $-(CH(CH_3)-CH_2O)_7-C_{10}H_{21}$,
$-(CH_2-CH_2O)_2-C_{11}H_{23}$, $-(CH_2-CH_2O)_3C_{11}H_{23}$, $-(CH_2-CH_2O)_4-C_{11}H_{23}$, $-(CH_2-CH_2O)_5-C_{11}H_{23}$, $-(CH_2-CH_2O)_6-C_{11}H_{23}$, $-(CH_2-CH_2O)_7-C_{11}H_{23}$,
$-(CH(CH_3)-CH_2O)_2-CH(CH_3)$, $-(CH(CH_3)-CH_2O)_3-C_{11}H_{23}$, $-(CH(CH_3)-CH_2O)_4-C_{11}H_{23}$, $-(CH(CH_3)-CH_2O)_5-C_{11}H_{23}$ $-(CH(CH_3)-CH_2O)_6-C_{11}H_{23}$, $-(CH(CH_3)-CH_2O)_7-C_{11}H_{23}$,
$-(CH_2-CH_2O)_2-C_{12}H_{25}$, $-(CH_2-CH_2O)_3-C_{12}H_{25}$, $-(CH_2-CH_2O)_4-C_{12}H_{25}$, $-(CH_2-CH_2O)_5-C_{12}H_{25}$, $-(CH_2-CH_2O)_6-C_{12}H_{25}$, $-(CH_2-CH_2O)_7-C_{12}H_{25}$,
$-(CH(CH_3)-CH_2O)_2-C_{12}H_{25}$, $-(CH(CH_3)-CH_2O)_3-C_{12}H_{25}$, $-(CH(CH_3)-CH_2O)_4-C_{12}H_{25}$, $-(CH(CH_3)-CH_2O)_5-C_{12}H_{25}$, $-(CH(CH_3)-CH_2O)_6-C_{12}H_{25}$, $-(CH(CH_3)-CH_2O)_7-C_{12}H_{25}$,
$-(CH_2-CH_2O)_2-C_{13}H_{27}$, $-(CH_2-CH_2O)_3-C_{13}H_{27}$, $-(CH_2-CH_2O)_4-C_{13}H_{27}$, $-(CH_2-CH_2O)_5-C_{13}H_{27}$, $-(CH_2-CH_2O)_6-C_{13}H_{27}$, $-(CH_2-CH_2O)_7-C_{13}H_{27}$,
$-(CH(CH_3)-CH_2O)_2-C_{13}H_{27}$, $-(CH(CH_3)-CH_2O)_3-C_{13}H_{27}$, $-(CH(CH_3)-CH_2O)_4-C_{13}H_{27}$, $-(CH(CH_3)-CH_2O)_5-C_{13}H_{27}$, $-(CH(CH_3)-CH_2O)_6-C_{13}H_{27}$, $-(CH(CH_3)-CH_2O)_7-C_{13}H_{27}$,
$-(CH_2-CH_2O)_2-C_{14}H_{23}$, $-(CH_2-CH_2O)_3-C_{14}H_{29}$, $-(CH_2-CH_2O)_4-C_{19}H_{29}$, $-(CH_2-CH_2O)_5-C_{19}H_{29}$, $-(CH_2-CH_2O)_6-C_{14}H_{29}$, $-(CH_2-CH_2O)_7-C_{14}H_{29}$,
$-(CH(CH_3)-CH_2O)_2-C_{19}H_{29}$, $-(CH(CH_3)-CH_2O)_3-C_{14}H_{29}$, $-(CH(CH_3)-CH_2O)_4-C_{14}H_{29}$, $-(CH(CH_3)-CH_2O)_5-C_{14}H_{29}$, $-(CH(CH_3)-CH_2O)_6-C_{14}H_{29}$, $-(CH(CH_3)-CH_2O)_7C_{14}H_{29}$,
$-(CH_2-CH_2O)_2-C_{15}H_{31}$, $-(CH_2-CH_2O)_3-C_{15}H_{31}$, $-(CH_2-CH_2O)_4-C_{15}H_{31}$, $-(CH_2-CH_2O)_5-C_{15}H_{31}$, $-(CH_2-CH_2O)_6-C_{15}H_{31}$, $-(CH_2-CH_2O)_7-C_{15}H_{31}$,
$-(CH(CH_3)-CH_2O)_2-C_{15}H_{31}$, $-(CH(CH_3)-CH_2O)_3-C_{15}H_{31}$, $-(CH(CH_3)-CH_2O)_4-C_{15}H_{31}$, $-(CH(CH_3)-CH_2O)_5-C_{15}H_{31}$, $-(CH(CH_3)-CH_2O)_6-C_{15}H_{31}$, $-(CH(CH_3)-CH_2O)_7-C_{15}H_{31}$,
$-(CH_2-CH_2O)_2-C_{16}H_{33}$, $-(CH_2-CH_2O)_3-C_{16}H_{33}$, $-(CH_2-CH_2O)_4-C_{16}H_{33}$, $-(CH_2-CH_2O)_5-C_{16}H_{33}$, $-(CH_2-CH_2O)_6-C_{16}H_{33}$, $-(CH_2-CH_2O)_7-C_{16}H_{33}$.
$-(CH(CH_3)-CH_2O)_2-C_{16}H_{33}$, $-(CH(CH_3)-CH_2O)_3-C_{16}H_{33}$, $-(CH(CH_3)-CH_2O)_4-C_{16}H_{33}$, $-(CH(CH_3)-CH_2O)_5-C_{16}H_{33}$, $-(CH(CH_3)-CH_2O)_6-C_{16}H_{33}$ oder $-(CH(CH_3)-CH_2O)_7-C_{16}H_{33}$.

Organosilane der allgemeinen Formel I können sein:

$[(MeO)_3Si(CH_2)_3]_2Sm$, $[(EtO)_3Si(CH_2)_3]_2S_m$,
$[(C_3H_7O)_3Si(CH_2)_3]_2Sm$.
$[(C_{12}H_{25}O)_3Si(CH_2)_3]Sm[(CH_2)_3Si(C_{12}H_{25}O)_3]$,
$[(C_{14}H_{29}O)_3Si(CH_2)_3]S_m[(CH_2)_3Si(C_{14}H_{29}O)_3]$,
$[(C_{16}H_{33}O)_3Si(CH_2)_3]S_m[(CH_2)_3Si(C_{16}H_{33}O)_3]$,
$[(C_{18}H_{37}O)_3Si(CH_2)_3]S_m[(CH_2)_3Si(C_{18}H_{37}O)_3]$,
$[(C_{12}H_{25}O)_2(CH_3)Si(CH_2)_3]S_m[(CH_2)_3Si(CH_3)(C_{12}H_{25}O)_2]$,
$[(C_{12}H_{25}O)(C_{14}H_{29}O)(CH_3)Si(CH_2)_3]S_m(CH_2)_3Si(CH_3)(C_{12}H_{25}O)(C_{14}H_{29}O)]$,
$[(C_{12}H_{25}O)(C_{14}H_{21}O)(CH_3)Si(CH_2)_3]S_m[(CH_2)_3Si(CH_3)(C_{12}H_{25}O)(C_{12}H_{25}O)]$,
$[(C_{12}H_{25}O)(C_{16}H_{33}O)(CH_3)Si(CH_2)_3]S_m[(CH_2)_3Si(CH_3)(C_{12}H_{25}O)(C_{16}H_{33}O)]$,
$[(C_{12}H_{25}O)(C_{18}H_{37}O)(CH_3)_{Si}(CH_2)_3]S_m[(CH_2)_3Si(CH_3)(C_{12}H_{25}O)(C_{18}H_{37}O)]$, $[(C_{14}H_{29}O)_2(CH_3)Si(CH_2)_3]Sm$, $[(CH_2)_3Si(CH_3)(C_{14}H_{29}O)_2]$, $[(C_{14}H_{29}O)(C_{16}H_{33}O)(CH_3)Si(CH_2)_3]S_m[(CH_2)_3Si(CH_3)(C_{14}H_{29}O)(C_{16}H_{33}O)]$,
$[(C_{14}H_{29}O)(C_{18}H_{37}O)(CH_3)Si(CH_2)3]S_m[(CH_2)_3Si(CH_3)(C_{14}H_{29}O)(C_{18}H_{37O})]$,
$[(C_{15}H_{33}O)_2(_{CH3})Si(CH_2)_3]S_m[(CH_2)_3Si(CH_3)(C_{16}H_{33}O)_2]$,
$[(C_{16}H_{33}O)(C_{18}H_{37}O)(CH_3)Si(CH_2)_3]S_m[(CH_2)_3Si(CH_3)(C_{16}H_{33}O)(C_{18}H_{37}O)]$,
$[(C_{18}H_{37}O)_2(CH_3)Si(CH_2)_3]S_m[(CH_2)_3Si(CH_3)(C_{18}H_{37}O)_2]$,
$[(C_{12}H_{25}O)(CH_3)_2Si(CH_2)_3]S_m[(CH_2)_3Si(CH_3)_2(C_{12}H_{25}O)]$,
$[(C_{12}H_{25}O)(CH3)_2Si(CH_2)_3]S_m[(CH_2)_3Si(CH_3)_2(C_{14}H_{29}O)]$,
$[(C_{12}H_{25}O)(CH_3)_2Si(CH_2)_3]S_m[(CH_2)_3Si(CH_3)_2(C_{16}H_{33}O)]$.
$[(C_{12}H_{25}O)(CH_3)_2Si(CH_2)_3]S_m[(CH_2)_3Si(CH_3)_2(C_{18}H_{37}O)]$,
$[(C_{14}H_{29}O)(CH_3)_2Si(CH_2)_3]Sm[(CH_2)_3Si(CH_3)_2(C_{14}H_{29}O)]$, $[(C_{14}H_{29}O)(CH_3)_2Si(CH_2)_3]S_m[(CH_2)_3Si(CH_3)_2(C_{16}H_{33}O)]$,

$[(C_{14}H_{29}O)\ (CH_3)_2Si\ (CH_2)\ _3]S_m[(CH_2)_3Si(CH_3)_2(C_{18}H_{37}O)]$,
$[(C_{16}H_{33}O)\ (CH_3)_2Si(CH_2)_3]S_m[(CH_2)_3Si(CH_3)_2(C_{16}H_{33}O)]$,
$[(C_{16}H_{33}O)\ (CH_3)_2Si(CH_2)_3]S_m[(CH_2)_3Si(CH_3)_2(C_{18}H_{37}O)]$, $[(C_{18}H_{37}O)\ (CH_3)_2Si(CH_2)_3]S_m[(CH_2)_3Si(CH_3)_2(C_{18}H_{37}O)]$,

mit m=1,5-4,5.

Spezielle Beispiele für Verbindungen, die Bestandteil von Mischungen der Formel I sein können, können sein:

$[(MeO)_3Si(CH_2)_3]_2S$, $[\ (MeO)_3Si(CH2)3]_2S_2$,
$[(MeO)_3Si(CH_2)_3]_2S_3$,$[(MeO)_3Si(CH_2)_3]_2S_4$,
$[(MeO)_3Si(CH_2)_3]_2S_5$,$[(MeO)_3Si(CH_2)_3]_2S_6$,
$[(MeO)_3Si(CH_2)_3]_2S_7$, $[(MeO)_3Si\ (CH_2)\ _3]\ _2S_8$,
$[(MeO)_3Si(CH_2)_3]_2S_9$, $[(MeO)_3Si(CH_2)_3]_2S_{10}$,
$[(MeO)_3Si(CH_2)_3]_2S_{11}$, $[(MeO)_3Si(CH_2)_3]_2S_{12}$,
$[(EtO)_3S_i(CH_2)_3]_2S$, $[(EtO)_3Si(CH_2)_3]_2S_2$,
$[(EtO)_3S_i(CH_2)\ _3]_2S_3$, $[(EtO)_3Si(CH_2)_3]_2S_4$,
$[(EtO)\ _3Si\ (CH_2)_3]_2S_5$, $[(EtO)_3Si(CH)_{23}]_2S_6$,
$[(EtO)_3Si(CH_2)_3]_2S_7$, $[(EtO)_3Si(CH_2)_3]_2S_8$,
$[(EtO)_3Si(CH_2)\ _3]_2S_9$, $[(EtO)_3Si(CH_2)_3]_2S_{10}$,
$[(EtO)_3Si(CH_2)_3]_2S_{11}$, $[(EtO)_3Si(CH_2)_3]_2S_{12}$,
$[(C_3H_7O)_3Si(CH_2)_3]\ _2S$, $[(C3H_7O)_3Si(CH_2)_3]_2S_2$,
$[(C_3H_7O)_3S_i(CH_2)_3]_2S_3$, $[(C_3H_7O)_3Si(CH_2)_3]_2S_4$,
$[(C_3H_7O)_3Si(CH_2)_3]_2S_5$, $[(C_3H_7O)_3Si(CH_2)_3]_2S_6$,
$[(C_3H_7O)_3Si(CH_2)_3]_2S_7$, $[(C_3H_7O)_3Si(CH_2)_3]_2S_8$,
$[(C_3H_7O)_3Si(CH_2)_3]_2S_9$, $[(C_3H_7O)_3Si(CH_2)_3]_2S_{10}$,
$[(C_3H_7O)_3Si(CH_2)_3]_2S_{11}$, $[(C_3H_7O)_3Si(CH_2)_3]_2S_{12}$.

Vorzugsweise können als (Halogenorganyl)alkoxysilane der Formel II
3-Chlorbutyl(triethoxysilan),
3-Chlorbutyl(trimethoxysilan),
3-Chlorbutyl(diethoxymethoxysilan),
3-Chlorpropyl(triethoxysilan),
3-Chlorpropyl(trimethoxysilan),
3-Chlorpropyl(diethoxymethoxysilan),
2-Chlorethyl(triethoxysilan),
2-Chlorethyl(trimethoxysilan),
2-Chlorethyl(diethoxymethoxysilan),
1-Chlormethyl(triethoxysilan),
1-Chlormethyl(trimethoxysilan),
1-Chlormethyldiethoxymethoxysilan),
3-Chlorpropyl(diethoxymethylsilan),
3-Chlorpropyl(dimethoxymethylsilan),
2-Chlorethyl(diethoxymethylsilan),
2-Chlorethyl(dimethoxymethylsilan),
1-Chlormethyl(diethoxymethylsilan),
1-Chlormethyl(dimethoxymethylsilan),
3-Chlorpropyl(ethoxydimethylsilan),
3-Chlorpropyl(methoxydimethylsilan),
2-Chlorethyl(ethoxydimethylsilan),
2-Chlorethyl(methoxydimethylsilan),
1-Chlormethyl(ethoxydimethylsilan),
1-Chlormethyl(methoxydimethylsilan),
$[(C_9H_{19}O\text{-}(CH_2\text{-}CH_2O)_2]\ (MeO)_2Si(CH_2)_3Cl$,
$[(C_9H_{19}O\text{-}(CH_2\text{-}CH_2O)_3]\ (MeO)_2Si(CH_2)_3Cl$,
$[(C_9H_{19}O\text{-}(CH_2\text{-}CH_2O)_4]\ (MeO)_2Si(CH_2)_3Cl$,
$[(C_9H_{19}O\text{-}(CH_2\text{-}CH_2O)_5]\ (MeO)_2Si(CH_2)_3Cl$,
$[(C_9H_{19}O\text{-}(CH_2\text{-}CH_2O)_6]\ (MeO)_2Si(CH_2)_3Cl$,
$[(C_{12}H_{25}O\text{-}(CH_2\text{-}CH_2O)_2]\ (MeO)_2Si(CH_2)_3Cl$,

$[(C_{12}H_{25}O-(CH_2-CH_2O)_3] (MeO)_2Si(CH_2)_3Cl$,
$[(C_{12}H_{25}O-(CH_2-CH_2O)_4] (MeO)_2Si(CH_2)_3Cl$,
$[(C_{12}H_{25}O-(CH_2-CH_2O)_5] (MeO)_2Si(CH_2)_3Cl$,
$[(C_{12}H_{25}O-(CH_2-CH_2O)_6] (MeO)_2Si(CH_2)_3Cl$,
$[(C_{13}H_{27}O-(CH_2-CH_2O)_2] (MeO)_2Si(CH_2)_3Cl$,
$[(C_{13}H_{27}O- (CH_2-CH_{2O})_3] (MeO)\ _2Si\ (CH_2)\ 3Cl$,

$[ (C_{13}H_{27}O-(CH_2-CH_2O)_4] (MeO)_2Si(CH_2)_3Cl$, $[(C_{13}H_{27}O- (CH_2-CH_2O)_5] (MeO)_2Si\ (CH_2)_3Cl$,
$[(C_{13}H_{27}O- (CH_2-CH_2O)_6] (MeO)_2Si\ (CH_2)_3Cl$,
$[(C_{14}H_{29}O-(CH_2-CH_2O)_2](MeO)_2Si(CH_2)_3Cl$,
$[(C_{14}H_{29}O-(CH_2-CH_2O)_3](MeO)_2Si(CH_2)_3Cl$,
$[(C_{14}H_{29}O- (CH_2-CH_2O)_4] (MeO)_2Si\ (CH_2)_3Cl$,
$[ (C_{14}H_{29}O- (CH_2-CH_2O)\ _5] (MeO)\ _2Si\ (CH_2)\ _3Cl$,
$[(C_{14}H_{29}O- (CH_2-CH_2O)_6] (MeO)_2Si\ (CH_2)\ _3Cl$,
$[(C_9H_{19}O-(CH_2-CH_2O)_2]_2(MeO)Si(CH_2)_3Cl$,
$[(C_9H_{19}O-(CH_2-CH_2O)_3]_2(MeO)Si(CH_2)_3Cl$,
$[(C_9H_{19}O-(CH_2-CH_2O)_4]_2(MeO)Si(CH_2)_3Cl$,
$[(C_9H_{19}O-(CH_2-CH_2O)_5]_2(MeO)Si(CH_2)_3Cl$,
$[(C_9H_{19}O-(CH_2-CH_2O)_6]_2(MeO)Si(CH_2)_3Cl$,
$[(C_{12}H_{25}O-(CH_2-CH_2O)_2]_2(MeO)Si(CH_2)_3Cl$,
$[(C_{12}H_{25}O-(CH_2-CH_2O)_3]_2(MeO)Si(CH_2)_3Cl$,
$[(C_{12}H_{25}O-(CH_2-CH_2O)_4]_2(MeO)Si(CH_2)_3Cl$,
$[(C_{12}H_{25}O-(CH_2-CH_2O)_5]_2(MeO)Si(CH_2)_3Cl$,
$[(C_{12}H_{25}O-(CH_2-CH_2O)_6]_2(MeO)Si(CH_2)_3Cl$,
$[(C_{13}H_{27}O-(CH_2-CH_2O)_2]_2(MeO)Si(CH_2)_3Cl$,
$[(C_{13}H_{27}O-(CH_2-CH_2O)_3]_2(MeO)Si(CH_2)_3Cl$,
$[(C_{13}H_{27}O-(CH_2-CH_2O)_{42}(MeO)Si(CH_2)_3Cl$,
$[(C_{13}H_{27}O-(CH_2-CH_2O)_5]_2(MeO)Si(CH_2)_3Cl$,
$[(C_{13}H_{27}O-(CH_2-CH_2O)_6]_2(MeO)Si(CH_2)_3Cl$,

$[(C_{14}H_{29}O-(CH_2-CH_2O)_2]_2(MeO)Si(CH_2)_3Cl$,
$[(C_{14}H_{29}O-(CH_2-CH_2O)_3]_2(MeO)Si(CH_2)_3Cl$,
$[(C_{14}H_{29}O-(CH_2-CH_2O)_4]_2(MeO)Si(CH_2)_3Cl$,
$[(C_{14}H_{29}O-(CH_2-CH_2O)_5]_2(MeO)Si(CH_2)_3Cl$,
$[(C_{14}H_{29}O-(CH_2-CH_2O)_6]_2(MeO)Si(CH_2)_3Cl$,
$[(C_9H_{19}O-(CH_2-CH_2O)_2](EtO)_2Si(CH_2)_3Cl$,
$[(C_9H_{19}O-(CH_2-CH_2O)_3](EtO)_2Si(CH_2)_3Cl$,
$[(C_9H_{19}O-(CH_2-CH_2O)_4](EtO)_2Si(CH_2)_3Cl$,
$[(C_9H_{19}O-(CH_2-CH_2O)_5](EtO)_2Si(CH_2)_3Cl$,
$[(C_9H_{19}O-(CH_2-CH_2O)_6](EtO)_2Si(CH_2)_3Cl$,
$[(C_{12}H_{25}O-(CH_2-CH_2O)_2](EtO)_2Si(CH_2)_3Cl$,
$[(C_{12}H_{25}O-(CH_2-CH_2O)_3](EtO)_2Si(CH_2)_3Cl$,
$[(C_{12}H_{25}O-(CH_2-CH_2O)_4](EtO)_2Si(CH_2)_3Cl$,
$[(C_{12}H_{25}O-(CH_2-CH_2O)_5](EtO)_2Si(CH_2)_3Cl$,
$[(C_{12}H_{25}O-(CH_2-CH_2O)_6](EtO)_2Si(CH_2)_3Cl$,
$[(C_{13}H_{27}O-(CH_2-CH_2O)_2](EtO)_2Si(CH_2)_3Cl$,
$[(C_{13}H_{27}O-(CH_2-CH_2O)_3](EtO)_2Si(CH_2)_3Cl$,
$[(C_{13}H_{27}O-(CH_2-CH_2O)_4](EtO)_2Si(CH_2)_3Cl$,
$[(C_{13}H_{27}O-(CH_2-CH_2O)_5](EtO)_2Si(CH_2)_3Cl$,
$[(C_{13}H_{27}O-(CH_2-CH_2O)_6](EtO)_2Si(CH_2)_3Cl$,
$[(C_{14}H_{29}O-(CH_2-CH_2O)_2](EtO)_2Si(CH_2)_3Cl$,
$[(C_{14}H_{29}O-(CH_2-CH_2O)_3](EtO)_2Si(CH_2)_3Cl$,
$[(C_{14}H_{29}O-(CH_2-CH_2O)_4](EtO)_2Si(CH_2)_3Cl$,
**[0021]** $[(C_{14}H_{29}O-(CH_2-CH_2O)_5](EtO)_2Si(CH_2)_3Cl$,
$[(C_{14}H_{29}O-(CH_2-CH_2O)_6](EtO)_2Si(CH_2)_3Cl$,
$[(C_9H_{19}O-(CH_2-CH_2O)_2](EtO)Si(CH_2)_3Cl$,
$[(C_9H_{19}O-(CH_2-CH_2O)_3]_2(EtO)Si(CH_2)_3Cl$,
$[(C_9H_{19}O-(CH_2-CH_2O)_4]_2(EtO)Si(CH_2)_3Cl$,

$[(C_9H_{19}O-(CH_2-CH_2O)_5]_2(EtO)Si(CH_2)_3Cl$,
$[(C_9H_{19}O-(CH_2-CH_2O)_6]_2(EtO)Si(CH_2)_3Cl$,
$[(C_{12}H_{25}O-(CH_2-CH_2O)_2]_2(EtO)Si(CH_2)_3Cl$,
$[(C_{12}H_{25}O-(CH_2CH_2O)_3]_2(EtO)Si(CH_2)_3Cl$,
$[(C_{12}H_{25}O-(CH_2-CH_2O)_4]_2(EtO)Si(CH_2)_3Cl$,
$[(C_{12}H_{25}O-(CH_2-CH_2O)_5]_2(EtO)Si(CH_2)_3Cl$,
$[(C_{12}H_{25}O-(CH_2-CH_2O)_6]_2(EtO)Si(CH_2)_3Cl$,
$[(C_{13}H_{27}O-(CH_2-CH_2O)_2]_2(EtO)Si(CH_2)_3Cl$,
$[(C_{13}H_{27}O-(CH_2-CH_2O)_3]_2(EtO)Si(CH_2)_3Cl$,
$[(C_{13}H_{27}O-(CH_2-CH_2O)_4]_2(EtO)Si(CH_2)_3Cl$,
$[(C_{13}H_{27}O-(CH_2-CH_2O)_5]_2(EtO)Si(CH_2)_3Cl$,
$[(C_{13}H_{27}O-(CH_2-CH_2O)_6]_2(EtO)Si(CH_2)_3Cl$,
$[(C_{14}H_{29}O-(CH_2-CH_2O)_2]_2(EtO)Si(CH_2)_3Cl$,
$[(C_{14}H_{29}O-(CH_2-CH_2O)_3]_2(EtO)Si(CH_2)_3Cl$,
$[(C_{14}H_{29}O-(CH_2CH_2O)_4]_2(EtO)Si(CH_2)_3Cl$,
$[(C_{14}H_{29}O-(CH_2-CH_2O)_5]_2(EtO)Si(CH_2)_3Cl$,
$[(C_{14}H_{29}O-(CH_2-CH_2O)_6]_2(EtO)Si(CH_2)_3Cl$,
$[(C_9H_{19}O-(CH_2-CH_2O)_2]_3Si(CH_2)_3Cl$,
$[(C_9H_{19}O-(CH_2-CH_2O)_3]_3Si(CH_2)_3Cl$,
$[(C_9H_{19}O-(CH_2-CH_2O)_4]_3Si(CH_2)_3Cl$,
$[(C_9H_{19}O-(CH_2-CH_2O)_5]_3Si(CH_2)_3Cl$,
$[(C_9H_{19}O-(CH_2-CH_2O)_6]_3Si(CH_2)_3Cl$,
$[(C_{12H25}O-(CH_2-CH_2O)_2]_3Si(CH_2)_3Cl$,
$[(C_{12}H_{25}O-(CH_2-CH_2O)_3]_3Si(CH_2)_3Cl$,
$[(C_{12}H_{25}O-(CH_2-CH_2O)_4]_3Si(CH_2)_3Cl$,
$[(C_{12}H_{25}O-(CH_2-CH_2O)_5]_3Si(CH_2)_3Cl$,
$[(C_{12}H_{25}O-(CH_2-CH_2O)_6]_3Si(CH_2)_3Cl$,
$[(C_{13}H_{27}O-(CH_2-CH_2O)_2]_3Si(CH_2)_3Cl$,
$[(C_{13}H_{27}O-(CH_2-CH_2O)_3]_3Si(CH_2)_3Cl$,
$[(C_{13}H_{27}O-(CH_2-CH_2O)_4]_3Si(CH_2)_3Cl$,
$[(C_{13}H_{27}O-(CH_2CH_2O)_5]_3Si(CH_2)3Cl$,
$[(C_{13}H_{27}O-(CH_2-CH_2O)_6]_3Si(CH_2)_3Cl$,
$[(C_{14}H_{29}O-(CH_2-CH_2O)_2]_3Si(CH_2)_3Cl$,
$[(C_{14}H_{29}O-(CH_2-CH_2O)_3]_3Si(CH_2)_3Cl$,
$[(C_{14}H_{29}O-(CH_2-CH_2O)_4]_3Si(CH_2)_3Cl$,
$[(C_{14}H_{29}O-(CH_2-CH_2O)_5]_3Si(CH_2)_3Cl$oder
$[(C_{19}H_{29}O-(CH_2-CH_2O)_6]_3Si(CH_2)_3Cl$
eingesetzt werden.

Das (Halogenorganyl)alkoxysilan kann ein (Halogenorganyl)alkoxysilan der Formel II oder eine Mischung aus (Halogenorganyl)alkoxysilanen der Formel II sein.

Alkalihydrogensulfid kann NaSH, LiSH, KSH oder CsSH sein. Das Alkalihydrogensulfid kann eine aufgereinigte Form oder eine Nebenbestandteile enthaltende Form sein.

Bevorzugt kann Natriumhydrogensulfid eingesetzt werden.

Das Alkalihydrogensulfid kann als Feststoff eingesetzt werden.

Das wasserhaltige feste Alkalihydrogensulfid kann zwischen 1 und 80 Gew.-%, bevorzugt zwischen 5 und 65 Gew.-%, besonders bevorzugt zwischen 10 und 55 Gew.-% und außerordentlich bevorzugt zwischen 20 und 45 Gew.-%, Wasser enthalten.

Das Alkalihydrogensulfid kann in Wasser gelöst vorliegen.

Das in Wasser gelöste Alkalihydrogensulfid kann zu mehr als 15 Gew.-%, bevorzugt zu mehr als 25 Gew.-%, besonders bevorzugt zu mehr als 35 Gew.-%, ganz besonders bevorzugt zu mehr als 45 Gew.-%, außerordentlich bevorzugt zu mehr als 55 Gew.-%, Wasser enthalten.

Die eingesetzten Alkalihydrogensulfide können als Feststoffe oder in Lösung der Reaktion zugesetzt werden.

Das wasserhaltige Alkalihydrogensulfid und der Schwefel können gemeinsam oder unabhängig voneinander als Feststoffe oder in Lösung der Reaktion zugesetzt werden.

Das wasserhaltige Alkalihydrogensulfid, der Schwefel und das Alkalicarbonat können gemeinsam oder unabhängig voneinander als Feststoffe oder in Lösung der Reaktion zugesetzt werden.

Das Alkalihydrogensulfid kann auf folgende Weise, beispielhaft für NaSH-Hydrat aufgeführt, analysiert werden:

Ca. 3 g Probe (Natriumhydrogensulfid) werden in einen 100 ml Messkolben eingewogen (Waage (Ablesbarkeit 1 mg oder besser)) und in ca. 75 ml Reinstwasser gelöst.

Anschließend wird 10 ml Bariumchlorid (Bariumchlorid-Lösung 10% in Reinstwasser) zugegeben, geschüttelt und bis zur Marke auffüllt.

Nach dem Auffüllen wird eine Stunde abgewartet bis der entstehende Niederschlag sich abgesetzt hat. Von der klaren, überstehenden Lösung werden 10 ml mit einer Vollpipette in ein 150 ml Becherglas pipettiert und mit etwa 100 ml Reinstwasser verdünnt. Anschließend wird eine dynamische pH-Titration mit HCl c(HCl) = 0,1 mol/l durchgeführt (pH-Elektrode, Titrationssystem).

Hierbei entspricht der erste Umschlagspunkt zwischen pH 9 und pH 10 dem NaOH-Gehalt (in Lösung) nach folgender Reaktion:

$$Na_2S + H_2O \rightarrow NaOH + NaSH.$$

Beim zweiten Umschlagspunkt zwischen pH 4 und pH 5 wird das in Lösung vorhandene NaSH nach folgender Gleichung umgesetzt:

$$NaSH + HCl \rightarrow NaCl + H_2S\uparrow.$$

Berechnung:

$$NaOH_{Lösung}\,[\%m/m] = \frac{V_1 \times M_{NaOH} \times m_{HCl} \times F \times 100 \times V_{MK}}{E \times V_P}$$

| | |
|---|---|
| $V_1$ = | erste Umschlagpunkt (ml) |
| $M_{NaOH}$ = | Molmasse von NaOH (39, 99 g/mol) |
| $m_{HCl}$ = | Molarität der Salzsäurelösung |
| E = | Einwaage in mg |
| F = | Titer der Salzsäure |
| $V_p$ = | Pipettenvolumen (ml) |
| $V_{MK}$ = | Messkolbenvolumen (ml) |

$$NaSH_{Lösung}\,[\%m/m] = \frac{[V_2 - (V_1)] \times M_{NaSH} \times m_{HCl} \times F \times 100 \times V_{MK}}{E \times V_P}$$

| | |
|---|---|
| $V_2$ = | zweite Umschlagpunkt (ml) |
| $V_1$ = | erste Umschlagpunkt (ml) |
| $M_{NaSH}$ = | Molmasse von NaSH (56,064 g/mol) |
| $m_{HCl}$ = | Molarität der Salzsäurelösung |
| E = | Einwaage in mg |
| F = | Titer der Salzsäure |
| $V_P$ = | Pipettenvolumen (ml) |
| $V_{MK}$ = | Messkolbenvolumen (ml) |

Das im festen Rohstoff enthaltene Alkalihydrogensulfid kann mittels folgender Gleichung bestimmt werden:

$$NaSH_{Feststoff}\,[\%m/m] = \frac{[V_2 - (V_1 \times 2)] \times M_{NaSH} \times m_{HCl} \times F \times 100 \times V_{MK}}{E \times V_P}$$

Die Alkalihydrogensulfide können neben Wasser, weitere Nebenbestandteile zu weniger als 30 Gew.-%, bevorzugt weniger als 20 Gew.-%, besonders bevorzugt weniger als 10 Gew.-%, ganz besonders bevorzugt weniger als 5 Gew.-%, enthalten.

Bezogen auf die Alkalihydrogensulfid-Menge im eingesetzten Alkalihydrogensulfid-Rohstoff können darin zwischen 0 und 10 Gew.-%, bevorzugt zwischen 0,4 und 8 Gew.-%, besonders bevorzugt zwischen 0,6 und 5 Gew.-% und ganz besonders bevorzugt zwischen 0,8 und 3 Gew.-%, Alkalisulfid enthalten sein.

Bezogen auf die Alkalihydrogensulfid-Menge im eingesetzten Alkalihydrogensulfid-Rohstoff kann darin weniger als 10 Gew.-%, bevorzugt weniger als 8 Gew.-%, besonders bevorzugt weniger als 5 Gew.-% und ganz besonders bevorzugt weniger als 3 Gew.-%, Alkalihydroxid enthalten sein.

Es können mehr als 0,44 Gew.-% Alkalihydroxid im gelösten Schwefelungsrohstoff Alkalihydrogensulfid enthalten sein.

Das Verfahren kann ohne separate Zugabe von Alkalisulfid-Hydrat in fester oder gelöster Form durchgeführt werden.

Weitere Nebenbestandteile von Alkalihydrogensulfiden können neben Wasser unabhängig voneinander Alkalisulfate, Alkalihydrogensulfate, Alkalithiosulfate und/oder Alkalihydrogenthiosulfate sein.

Der Wassergehalt der Alkalihydrogensulfide wird durch Karl-Fischer-Titration analog zu DIN 51777 bestimmt. Dabei werden die störenden Einflüsse von schwefelhaltigen Komponenten durch eine iodometrische Rücktitration nach den bekannten Prinzipien und Methoden berücksichtigt.

Alkalicarbonat kann $Na_2CO_3$, $Li_2CO_3$, $K_2CO_3$ oder $Cs_2CO_3$; sein. $Na_2CO_3$ kann bevorzugt sein.

Das erfindungsgemäße Verfahren kann mit nahezu staubfreiem Alkalicarbonat und/oder mit feinteiligem Alkalicarbonat realisiert werden.

Nahezu staubfreies Alkalicarbonat kann bevorzugt eine durchschnittliche Partikelgröße (Median) von >50 µm, bevorzugt >100 µm, besonders bevorzugt >200 µm, ganz besonders bevorzugt >300 µm, gemessen mit Laserbeugungsanalyse oder Siebung, haben.

Nahezu staubfreies Alkalicarbonat kann eine durchschnittliche Partikelgröße (Median) zwischen 50 und 2000 µm, bevorzugt zwischen 100 und 1500 µm, besonders bevorzugt zwischen 150 und 1000 µm, ganz besonders bevorzugt zwischen 200 und 500 µm, gemessen mit Laserbeugungsanalyse oder Siebung, haben.

Feinteiliges Alkalicarbonat kann eine durchschnittliche Partikelgröße (Median) von <500 µm, bevorzugt <250 µm, besonders bevorzugt <150 µm, ganz besonders bevorzugt <100 µm, gemessen mit Laserbeugungsanalyse oder Siebung, haben.

Feinteiliges Alkalicarbonat kann eine durchschnittliche Partikelgröße (Median) zwischen 20 und 200 µm, bevorzugt zwischen 30 und 180 µm, besonders bevorzugt zwischen 40 und 150 µm, ganz besonders bevorzugt zwischen 50 und 150 µm, gemessen mit Laserbeugungsanalyse oder Siebung, haben.

Die Bestimmung der Partikelgrößenverteilung der Proben durch Laserbeugungsanalyse erfolgt ohne Ultraschallbehandlung mit einem Coulter LS 100 mit Dry Powder Modul (Firma Beckman-Coulter) gemäß den allgemein bekannten Regeln und Bedienvorschriften. Für 60 sec. wird ein kontinuierlicher Strom an originalen, unbehandelten Partikeln der zu messenden Probe in einem Luftstrahl durch einen Laserstrahl geführt. Der Partikelstrom wird durchstrahlt und die unterschiedlichen Korngrößen (Partikelgrößen) detektiert und statistisch ausgewertet. Die messbare Partikelgröße beträgt minimal 0,4 µm und maximal 900 µm.

Die Partikelgrößenverteilung laut Siebung werden folgendermaßen ermittelt:

Eine bestimmte Menge Probe wird mit einem Stapel von Sieben unterschiedlicher, genormter Maschenweite aufgetrennt.

Durch Auswiegen wird der Anteil der einzelnen Fraktionen ermittelt. Die dafür verwendeten Geräte: Mech. Siebmaschine (Ro-tap); Präzisionswaage: Genauigkeit ± 0.01 g (Firma Mettler).

Standardsiebe U.S. Standard No. 120, Höhe 25 mm, Ø : 200 mm; Maschenweiten zum Beispiel: 300 µm (50 mesh); 150 µm (100 mesh); 75 µm (200 mesh).

Die Siebe und ein Auffangbehälter werden in der vorgesehenen Reihenfolge, das heisst mit von oben nach unten abnehmender Öffnungsweite, zusammengesteckt. Man wiegt 100 g der zu untersuchenden Probe ab, wobei eine passende Schaufel verwendet wird. Eine Vorauswahl des Materials durch Ausgießen oder Umgießen ist zu vermeiden. Nach der Überführung des abgewogenen Materials auf das oberste Sieb wird ein Deckel aufgesetzt und der Stapel so in die Siebmaschine eingesetzt, dass ein Spiel von ca. 1,5 mm verbleibt und die Siebe somit frei rotieren können.

Die Siebe werden in der Maschine befestigt und dann 5 min lang - mit dem Rüttler beziehungsweise Klopfwerk in Betrieb - geschüttelt. Danach nimmt man die Siebe nacheinander auseinander und wiegt die jeweils darin befindliche Materialmenge auf 0,1 g genau aus. Von jeder Probe wird eine Doppelbestimmung durchgeführt. Es wird jeweils der Mittelwert der in den einzelnen Sieben und im Auffangbehälter gefundenen Materialmenge in % angegeben. Der Median kann aus den Werten für die Fraktionen berechnet werden.

Das erfindungsgemäße Verfahren kann mit nahezu staubfreiem Schwefel und/oder mit feinteiligem Schwefel durchgeführt werden.

Der nahezu staubfreie Schwefel kann eine durchschnittliche Partikelgröße, gemessen durch Siebung, von >200 μm, bevorzugt >500 μm, besonders bevorzugt >1000 μm, ganz besonders bevorzugt >2000 μm, haben.

Der nahezu staubfreie Schwefel kann eine durchschnittliche Partikelgröße, gemessen durch Siebung, zwischen 1 μm und 20000 μm, bevorzugt zwischen 100 μm und 10000 μm, besonders bevorzugt zwischen 200 μm und 5000 μm, ganz besonders bevorzugt zwischen 500 μm und 2000 μm, haben.

Der feinteilige Schwefel kann eine durchschnittliche Partikelgröße gemessen durch Siebung zwischen 1 μm und 200 μm, bevorzugt zwischen 10 μm und 150 μm, besonders bevorzugt zwischen 10 μm und 100 μm, ganz besonders bevorzugt zwischen 10 μm und 75 μm, haben.

Der feinteilige Schwefel kann eine durchschnittliche Partikelgröße gemessen durch Siebung von <500 μm, bevorzugt <250 μm, besonders bevorzugt <100 μm, ganz besonders bevorzugt <80 μm, haben.

Das molare Verhältnis von (Halogenorganyl)alkoxysilan der Formel II zu Schwefel kann kleiner 1:0,4, bevorzugt kleiner 1:0,45, besonders bevorzugt kleiner 1:0,5, ganz besonders bevorzugt kleiner 1:0,55, außerordentlich bevorzugt kleiner 1:0,6, sein.

Das molare Verhältnis von (Halogenorganyl)alkoxysilan der Formel II zu Schwefel kann zwischen 1:0,4 und 1:1,5, bevorzugt zwischen 1:0,45 und 1:1,4, besonders bevorzugt zwischen 1:0,5 und 1:1,35, ganz besonders bevorzugt zwischen 1:0,55 und 1:1,3 und außerordentlich bevorzugt zwischen 1:0,6 und 1:1,15, sein.

Das molare Verhältnis von (Halogenorganyl)alkoxysilan der Formel II zu Alkalicarbonat kann kleiner 1:0,25, bevorzugt kleiner 1:0,45, besonders bevorzugt kleiner 1:0,5, ganz besonders bevorzugt kleiner 1:0,55, außerordentlich bevorzugt kleiner 1:0,6, sein.

Das molare Verhältnis von Alkalicarbonat zu (Halogenorganyl)alkoxysilan der Formel II kann zwischen 1:0,1 und 1:2, bevorzugt zwischen 1:0,2 und 1:1,5, besonders bevorzugt zwischen 1:0,3 und 1:1,0, ganz besonders bevorzugt zwischen 1:0,4 und 1:0,8, außerordentlich bevorzugt zwischen 1:0,45 und 1:0,7, sein.

Das molare Verhältnis von Schwefel zu Alkalihydrogensulfid kann kleiner 1:0,25, bevorzugt kleiner 1:0,45, besonders bevorzugt kleiner 1:0,7, ganz besonders bevorzugt kleiner 1:0,9, außerordentlich bevorzugt kleiner 1:1,0, sein.

Das molare Verhältnis von Alkalihydrogensulfid zu Schwefel kann zwischen 1:0,1 und 1:3, bevorzugt zwischen 1:0,3 und 1:2,75, besonders bevorzugt zwischen 1:0,5 und 1:2, ganz besonders bevorzugt zwischen 1:0,7 und 1:1,7, außerordentlich bevorzugt zwischen 1:0,85 und 1:1,4, sein.

Das molare Verhältnis von Schwefel zu Alkalicarbonat kann größer 1:1,5, bevorzugt größer 1:1,4, besonders bevorzugt größer 1:1,3, ganz besonders bevorzugt größer 1:1,2, außerordentlich bevorzugt größer 1:1,1, sein, wenn m < 2,5 ist.

Das molare Verhältnis von Alkalicarbonat zu Schwefel kann kleiner 1:1,5, bevorzugt kleiner 1:1,8, besonders bevorzugt kleiner 1:2,0, ganz besonders bevorzugt kleiner 1:2,3, außerordentlich bevorzugt kleiner 1:2,5 sein, wenn m > 2,5 ist.

Das molare Verhältnis von Alkalicarbonat zu Schwefel kann zwischen 1:0,1 und 1:3, bevorzugt zwischen 1: 0,3 und 1:2,75, besonders bevorzugt zwischen 1:0,5 und 1:2, ganz besonders bevorzugt zwischen 1:0,7 und 1:1,55, außerordentlich bevorzugt zwischen 1:0,85 und 1:1,4, sein.

Das erfindungsgemäße Verfahren kann ohne Phasentransferkatalysator durchgeführt werden. Das erfindungsgemäße Verfahren kann ohne Tetraalkylammoniumhalogenid durchgeführt werden.

Vor, während oder nach der Reaktion können Additive zugesetzt werden.

Additive können nichtalkoholische Lösungsmittel sein.

Als Additive, die nichtalkoholische Lösungsmittel sind, können bevorzugt in reiner oder technischer Qualität Alkane, wie beispielsweise Pentan, Hexan, Cyclohexan, Heptan oder Oktan,
Ether, wie beispielsweise Diethylether, Tetrahydrofuran, 1,2-Dimethoxyethan, Dioxan, Dioxolan, Ethylenglykole oder Propylenglykole,
aromatische Lösungsmittel, wie beispielsweise Benzol, Toluol, o-Xylol, m-Xylol oder p-Xylol, oder carbonylhaltige Lösungsmittel, wie beispielsweise Dimethylformamid, eingesetzt werden.

Vor der Umsetzung und/oder während der Umsetzung und/oder zum Ende der Umsetzung und/oder während der Aufarbeitung können polare, protische, aprotische, basische oder saure Additive zur Reaktionsmischung gegeben werden.

Additive können beispielsweise organische oder anorganische Säuren oder organische oder anorganische Basen sein.

Anorganische Säuren können zum Beispiel Verbindungen der Zusammensetzung HCl, $H_2S$, $H_2SO_4$, $H_3PO_4$, (Alkali) $H_2PO_4$, (Alkali) $_2HPO_4$, $H_3CO_3$ oder (Alkali) $HSO_4$ sein.

Anorganische Basen können zum Beispiel Verbindungen der Zusammensetzung $AlkaliHCO_3$, $(Alkali)_2HPO_4$ oder $(Alkali)_3PO_4$ sein.

Saure oder basische Additive, die der Reaktionsmischung vor, während oder zum Ende des Verfahrens zugesetzt werden, können die Struktur $AlkaliHCO_3$, (Alkali) $H_2PO_4$, $(Alkali)_2HPO_4$, $(Alkali)_3PO_4$, $(Alkali)_2SO_4$ oder (Alkali) $HSO_4$ haben.

$AlkaliHCO_3$ kann bevorzugt während oder am Ende des Verfahrens oder während der Aufarbeitung zugesetzt werden.

Als Additive können (Halogenorganyl)halogensilane eingesetzt werden.

Als (Halogenorganyl)halogensilane können Verbindungen der allgemeinen Formel III

$$(R^{IV})_2(Hal)Si\text{-}R''\text{-}Hal \qquad III,$$

eingesetzt werden, wobei Hal, R und R" die oben angegebene Bedeutung haben und $R^{IV}$ unabhängig voneinander R oder Hal ist.

Vorzugsweise können als (Halogenorganyl)halogensilane (Chlororganyl)chlorsilane eingesetzt werden.

Das (Halogenorganyl)halogensilan kann ein (Halogenorganyl)halogensilan der allgemeinen Formel III oder eine Mischung aus (Halogenorganyl)chlorsilanen der allgemeinen Formel III sein.

Die Menge an hydrolisierbarem Silicium-Halogenid in Mischungen aus (Halogenorganyl)alkyloxysilan und (Halogenorganyl)halogensilan, die mit dem genannten Analyseverfahren bestimmt werden kann, kann zwischen 2 und 800.000 mg/kg, bevorzugt zwischen 2 und 50.000 mg/kg, besonders bevorzugt zwischen 5 und 10.000 mg/kg, ganz besonders bevorzugt zwischen 10 und 500 mg/kg, betragen.

Die Menge an hydrolisierbarem Halogenid in den verwendeten Mischungen aus (Halogenorganyl)alkoxysilan und (Halogenorganyl)halogensilan wird durch das folgende Verfahren bestimmt: Maximal 20 g der Probe werden in einem 150 ml Becherglas mit 80 ml Ethanol und 10 ml Essigsäure versetzt. Der Halogenidgehalt wird potentiographisch mit Silbernitratlösung ($c(AgNO_3)$=0,01 mol/1) titriert.

Als Additive können vor oder/und während oder/und am Ende der Reaktion Verbindungen zugesetzt werden, die in Verbindung mit Alkoholen anorganische oder organische Säuren freisetzen.

Als Additive können vor oder/und während oder/und am Ende der Reaktion Verbindungen zugesetzt werden, die in Verbindung mit Alkoholen anorganische oder organische Basen freisetzen.

Als Alkohol können sowohl primäre, sekundäre oder tertiäre Alkohole mit 1 bis 24, vorzugsweise 1 bis 6, besonders bevorzugt 1 bis 4, Kohlenstoffatomen eingesetzt werden.

Als Alkohol können Alkylether der Formel $HO\text{-}(CR^{v}_2)y'\text{-}O\text{-}Alk$ wobei y' die oben angegebene Bedeutung hat, oder Alkylpolyether der Formel $HO\text{-}(CR''_2O)_y\text{-}Alk$ oder $HO\text{-}(CR^{V}2\text{-}CR^{V}_2\text{-}O)_y\text{-}Alk$ eingesetzt werden, wobei y die oben angegebene Bedeutung hat, $R^V$ unabhängig voneinander H oder eine Alkylgruppe, vorzugsweise $CH_3$-Gruppe, ist und Alk die oben angegebene Bedeutung hat.

Als primäre, sekundäre oder tertiäre Alkohole können Methanol, Ethanol, n-Propanol, i-Propanol, i-Butanol, n-Butanol, Dodecanol, Tetradecanol, Hexadecanol oder Octadecanol eingesetzt werden. Als Alkylpolyether können $HO\text{-}(CH_2\text{-}CH_2\text{-}O)_a\text{-}C_bH_{2b+1}$, mit a gleich 2 bis 20, bevorzugt 2-10, besonders bevorzugt 2-8, ganz besonders bevorzugt 3-6, und b = 1-30, bevorzugt 2-20, besonders bevorzugt 6-18, ganz besonders bevorzugt 10-18, eingesetzt werden.

Als Alkohol kann bevorzugt Ethanol eingesetzt werden.

Primäre Alkohole können sein

$HO\text{-}(CH_2\text{-}CH_2\text{-}O)_2\text{-}C_6H_{13}$, $HO\text{-}(CH_2\text{-}CH_2\text{-}O)_3\text{-}C_6H_{13}$, $HO\text{-}(CH_2\text{-}CH_2\text{-}O)_4\text{-}C_6H_{13}$, $HO\text{-}(CH_2\text{-}CH_2\text{-}O)_5\text{-}C_6H_{13}$, $HO\text{-}(CH_2CHO)_6\text{-}C_6H_{13}$ $HO\text{-}(CH_2CH_2O)_7\text{-}C_6H_{13}$, $HO\text{-}(CH_2\text{-}CH_2\text{-}O)_8\text{-}C_6H_{13}$, $HO\text{-}(CH_2\text{-}CH_2\text{-}O)_9\text{-}C_6H_{13}$, $HO\text{-}(CH_2\text{-}CH_2\text{-}O)_2C_{10}H_{21}$, $HO\text{-}(CH_2\text{-}CH_2\text{-}O)_3\text{-}C_{10}H_{21}$, $HO\text{-}(CH_2\text{-}CH_2\text{-}O)_4\text{-}C_{10}H_{21}$, $HO\text{-}(CH_2CH_2O)_5\text{-}C_{10}H_{21}$, $HO\text{-}(CH_2CH_2\text{-}O)_6\text{-}C_{10}H_{21}$, $HO\text{-}(CH_2CH_2\text{-}O)_7C_{10}H_{21}$, $HO\text{-}CH_2\text{-}CH_2\text{-}O)_8\text{-}C_{10}H_{21}$, $HO\text{-}(CH_2\text{-}CH_2\text{-}O)_9\text{-}C_{10}H_{21}$, $HO\text{-}(CH_2\text{-}CH_2\text{-}O)_2C_{13}H_{27}$, $HO\text{-}(CH_2\text{-}CH_2\text{-}O)_3\text{-}C_{13}H_{27}$, $HO\text{-}(CH_2\text{-}CH_2\text{-}O)_4\text{-}C_{13}H_{27}$, $HO\text{-}(CH_2\text{-}CH_2\text{-}O)_5\text{-}C_{13}H_{27}$, $HO\text{-}(CH_2\text{-}CH_2\text{-}O)_6\text{-}C_{13}H_{27}$, $HO\text{-}(CH_2\text{-}CH_2\text{-}O)_7C_{13}H_{27}$, $HO\text{-}(CH_2\text{-}CH_2\text{-}O)_8\text{-}C_{13}H_{27}$, $HO\text{-}(CH_2\text{-}CH_2\text{-}O)_9\text{-}C_{13}H_{27}$, $HO\text{-}(CH_2\text{-}CH_2\text{-}O)_2\text{-}C_{15}H_{31}$, $HO\text{-}(CH_2CH_2\text{-}O)_3\text{-}C_{15}H_{31}$, $HO\text{-}(CH_2\text{-}CH_2\text{-}O)_4\text{-}C_{15}H_{31}$, $HO\text{-}(CH_2\text{-}CH_2\text{-}O)_5\text{-}C_{15}H_{31}$, $HO\text{-}(CH_2\text{-}CH_2\text{-}O)_6\text{-}C_{15}H_{31}$, $HO\text{-}(CH_2\text{-}CH_2\text{-}O)_7C_{15}H_{31}$, $HO\text{-}(CH_2\text{-}CH_2\text{-}O)_8\text{-}C_{15}H_{31}$, oder $HO\text{-}(CH_2\text{-}CH_2\text{-}O)_9\text{-}C_{15}H_{31}$.

Die Menge an Alkohol kann mindestens 0,1 Vol.-%, bevorzugt 10 bis 500 Vol.-%, besonders bevorzugt 15 bis 300 Vol.-%, ganz besonders bevorzugt 50 bis 200 Vol.-%, der eingesetzten Silankomponenten betragen.

Die Menge an Alkohol kann mindestens 0,1 Gew.-%, bevorzugt 10 bis 500 Gew.-%, besonders bevorzugt 15 bis 200 Gew.-%, ganz besonders bevorzugt 25 bis 100 Gew.-%, außerordentlich bevorzugt 25 bis 50 Gew.-%, der eingesetzten (Halogenorganyl)alkoxysilane der Formel II betragen.

Als Alkohol können Mischungen von Alkoholen eingesetzt werden.

Der eingesetzte Alkohol kann Wasser enthalten.

Der Alkohol kann aus einem Alkohol-Wassergemisch durch Destillation als Azeotrop gewonnen werden.

Der eingesetzte Alkohol kann 1-80 Gew.-%, bevorzugt 5-60 Gew.-%, besonders bevorzugt 7-40 Gew.-%, ganz besonders bevorzugt 8-30 Gew.-%, außerordentlich bevorzugt 10-20 Gew.-%, Wasser enthalten.

Der Alkohol kann weniger als 50 Gew.-%, bevorzugt weniger als 40 Gew.-%, besonders bevorzugt weniger als 30 Gew.-%, insbesondere bevorzugt weniger als 20 Gew.-%, Wasser enthalten.

Die Umsetzung kann bei Temperaturen zwischen 0 und 180°C, bevorzugt zwischen 30 und 150°C, besonders bevorzugt zwischen 50 und 100°C, erfolgen.

Das erfindungsgemäße Verfahren kann in einem offenen oder geschlossenen Gefäß durchgeführt werden.

Das erfindungsgemäße Verfahren kann so durchgeführt werden, dass ein entstehendes Gas nicht aus dem Reaktionsraum entweichen kann.

Die Reaktion kann bevorzugt in einem geschlossenen Gefäß durchgeführt werden.

Das geschlossene Gefäß kann bevorzugt ein aus der Technik bekanntes Reaktionsgefäß sein, das es erlaubt, bei Drücken bis 20 bar und Temperaturen bis 200°C zu arbeiten.

Das geschlossene Gefäß kann besonders bevorzugt ein aus der Technik bekanntes Reaktionsgefäß sein, das es erlaubt, bei Drücken bis 6 bar und Temperaturen bis 150°C zu arbeiten.

Das geschlossene Gefäß kann einen Heiz-/Kühlkreislauf besitzen.

Die Umsetzung und Aufarbeitung kann bevorzugt in korrosionsbeständigen Reaktionsgefäßen oder Autoklaven, beispielsweise aus Glas, Teflon, Plastwerkstoffen, emaillierten bzw. beschichteten Stahl, Edelstahl, Hastelloy oder Tantal erfolgen.

Die Reaktion kann bei der Herstellung von Organosilanen der allgemeinen Formel I unter erhöhtem Druck von 0,1 bar bis 20 bar, bevorzugt von 0,1 bar bis 15 bar, besonders bevorzugt von 0,5 bar bis 10 bar, ganz besonders bevorzugt von 0,5 bar bis 6 bar, durchgeführt werden.

Der Druck im Reaktionsgefäß kann von der Füllhöhe im Reaktionsgefäß abhängig sein. Hohe Füllgrade können den Druck im Reaktionsgefäß während der Reaktion bei $<6$ bar, bevorzugt $<5$ bar, besonders bevorzugt $<4$ bar, halten.

Die Reaktion kann bevorzugt unter Luftabschluß durchgeführt werden.

Verbindungen der allgemeinen Formel I können bevorzugt in einem Alkohol in einem geschlossenen Gefäß in Gegenwart von $H_2S$ hergestellt werden.

Verbindungen der allgemeinen Formel I können bevorzugt in einem Alkohol in einem geschlossenen Gefäß und einem erhöhten Druck in Gegenwart von $H_2S$ hergestellt werden.

Die Aufarbeitung der Rohproduktsuspension kann eine Filtration und Abtrennung von festen Bestandteilen beinhalten.

Die Aufarbeitung der Rohproduktsuspension kann eine Destillation und Abtrennung von flüchtigen Bestandteilen beinhalten.

Die Aufarbeitung der Rohproduktsuspension kann zuerst eine Destillation und dann eine Filtration beinhalten.

Die Aufarbeitung der Rohproduktsuspension kann zuerst eine Filtration und dann eine Destillation beinhalten.

Die Aufarbeitung der Rohproduktsuspension kann zuerst eine Filtration, danach eine Destillation und anschließend eine weitere Filtration beinhalten.

Die Aufarbeitung der Rohproduktsuspension kann zuerst eine Destillation, danach eine Filtration und anschließend eine weitere Behandlung unter erhöhter Temperatur und unter Vakuum beinhalten.

Zur Aufarbeitung der Rohproduktsuspension kann das Alkohol-/Wasser-Gemisch entfernt und das gebildete Produkt der allgemeinen Formel I anschließend von dem Feststoff abgetrennt werden.

Zur Aufarbeitung der Rohproduktsuspension kann der Feststoff abgetrennt und anschließend ein Alkohol-/Wasser-Gemisch vom gebildeten Produkt der allgemeinen Formel I abgetrennt werden. Das Alkohol-/Wasser-Gemisch kann vom gebildeten Produkt der allgemeinen Formel I durch Destillation oder Phasenseparation abtrennt werden.

Zur Aufarbeitung der Rohproduktsuspension kann das Alkohol-/Wasser-Gemisch entfernt, und die verbleibende Rohproduktsuspension, enthaltend die Organosiliciumverbindung der allgemeinen Formel (I) und Alkalihalogenid, mit Wasser gemischt und die sich bildenden Phasen getrennt werden.

Die nach der Reaktion vorliegende, salzhaltige Rohproduktsuspension kann bei Normaldruck oder reduziertem Druck, bevorzugt bei einem reduzierten Druck zwischen 1 und 600 mbar, besonders bevorzugt zwischen 5 und 250 mbar, ganz besonders bevorzugt zwischen 10 und 100 mbar, aufgearbeitet werden.

Während der Aufarbeitung der Rohprodukte kann wasserhaltiger Alkohol im Vakuum und bei erhöhter Temperatur entfernt werden.

Während der Aufarbeitung der Rohprodukte kann wasserhaltiger Alkohol im Vakuum und bei erhöhter Temperatur so entfernt werden, dass während der ersten Stunde der Destillation 0,1 bis 75 Gew.-%, bevorzugt 5 bis 60 Gew.-%, besonders bevorzugt 5 bis 50 Gew.-% und ganz besonders bevorzugt 10 bis 40 Gew.-%, des wasserhaltigen Alkohols entfernt werden.

Während der Aufarbeitung der Rohprodukte kann wasserhaltiger Alkohol im Vakuum und bei erhöhter Temperatur so entfernt werden, dass während der zweiten Stunde der Destillation 5 bis 70 Gew.-%, bevorzugt 10 bis 60 Gew.-%, besonders bevorzugt 15 bis 50 Gew.-% und ganz besonders bevorzugt 20 bis 45 Gew.-%, des wasserhaltigen Alkohols entfernt werden.

Es können dem Fachmann bekannte wasserschleppende Substanzen (Azeotropbildner) zugesetzt und verwendet werden.

Für die Abtrennung von Alkohol, Azeotropbildner und Wasser können dem Fachmann bekannte Hilfsmittel und

Vorrichtungen verwendet werden.

Das Alkohol-/Wasser-Gemisch kann Ethanol enthalten.

Bevorzugt können Vertikalrohrverdampfer, Horizontalrohrverdampfer, Umlaufverdampfer, Schrägrohrverdampfer, Fallfilmverdampfer, Plattenverdampfer, Blasrohrverdampfer, Rotorverdampfer, Zentrifugalverdampfer, Schneckenverdampfer, Dünnschichtverdampfer und Dünnfilmstripper für die Abtrennung von Alkohol, Azeotropbildner und Wasser verwendet werden.

Die nach der Reaktion vorliegende, salzhaltige Produktsuspension kann bei Temperaturen zwischen 0 und 200 °C, bevorzugt zwischen 5 und 100°C, besonders bevorzugt zwischen 10 und 70°C, ganz besonders bevorzugt zwischen 20 und 60°C, aufgearbeitet werden.

Die entstandene Rohproduktsuspension kann Alkalihalogenide, beispielsweise NaCl, Alkalihydrogencarbonate, beispielsweise $NaHCO_3$, und Organosilane der allgemeinen Formel I enthalten.

Aus der Rohproduktsuspension kann der Alkohol entfernt, das verbleibende Gemisch, enthaltend die Verbindung oder Verbindungen der allgemeinen Formel I und Alkalihalogenid, mit Wasser gemischt und die sich bildenden Phasen getrennt werden. Die entstehende Suspension kann Alkalihalogenide, beispielsweise NaCl, Alkalihydrogencarbonate, beispielsweise $NaHCO_3$, und Verbindungen der allgemeinen Formel I enthalten.

Das Produkt kann sich nach der Reaktion von der salzhaltigen Wasserphase durch Phasenseparation abtrennen. Das Produkt kann, nach der Phasenseparation, von der salzhaltigen Wasserphase abgetrennt werden. Das Produkt kann, nach der Abtrennung von der salzhaltigen Phase, getrocknet werden.

Aus der Rohproduktsuspension kann der Alkohol entfernt, das Gemisch, enthaltend die Verbindungen der allgemeinen Formel I und Alkalihalogenid, mit Wasser gemischt und die sich bildenden Phasen getrennt werden.

Zu einer Mischung aus Produkt und Feststoff, gegebenenfalls Alkohol und/oder Wasser, kann zusätzliches Wasser gegeben werden.

Bei der Aufarbeitung kann Wasser in einer Menge von 1 bis 500 Gew.-%, bevorzugt 1 bis 300 Gew.-%, besonders bevorzugt 5 bis 150 Gew.-%, ganz besonders bevorzugt 5 bis 75 Gew.-%, bezogen auf die Verbindung oder Verbindungen der Formel I, zugegeben werden.

Bei der Aufarbeitung kann das zugegebene Wasser deionisiertes Wasser sein. Bei der Aufarbeitung kann das zugegebene Wasser einen Puffer, beispielsweise Natriumhydrogencarbonat und/oder Natriumcarbonat, enthalten. Der Puffergehalt des Wassers kann 1 Gew.-% bis 20 Gew.-%, bevorzugt 2 Gew.-% bis 10 Ges.-%, besonders bevorzugt 2 Gew.-% bis 5 Gew.-%, betragen.

Das zugegebene Wasser kann einen pH-Wert zwischen 3 und 11, bevorzugt zwischen 4 und 10, besonders bevorzugt zwischen 5 und 9,5, ganz besonders bevorzugt zwischen 7 und 9,5, aufweisen.

Der pH-Wert des zugegebenen Wassers kann durch einen Puffer eingestellt werden.

Die Rohproduktausbeute des erfindungsgemäßen Verfahrens kann größer als 70%, bevorzugt größer als 80%, besonders bevorzugt größer als 85%, ganz besonders bevorzugt größer als 90%, bezogen auf die theoretische Ausbeute bezüglich der eingesetzten Menge an (Halogenorganyl)alkoxysilan der Formel II sein.

Die Rohproduktausbeute kann die gravimetrisch bestimmte Summe aller isolierten flüssigen Verbindungen, nachdem Alkohol, Wasser und Feststoffe entfernt sind, sein.

Die Menge an $H_2S$ die während der Reaktion freigesetzt wird, kann nach oder bereits während der Reaktion bestimmt werden. Zur quantitativen Bestimmung kann das $H_2S$ beispielsweise durch eine Kupfersulfat oder Bleiacetatlösung geleitet werden und der ausgefallene Feststoff gravimetrisch bestimmt werden.

Die Menge an $H_2S$ kann am Ende der Reaktion bezüglich der Menge an eingesetztem Alkalicabonat weniger als 50 mol-%, bevorzugt weniger als 30 mol-%, besonders bevorzugt weniger als 20 mol-%, ganz besonders bevorzugt weniger als 10 mol-%, betragen.

Die Menge an $H_2S$ kann am Ende der Reaktion bezüglich der Menge an eingesetztem Alkalihydrogensulfid weniger als 50 mol-%, bevorzugt weniger als 30 mol-%, besonders bevorzugt weniger als 20 mol-%, ganz besonders bevorzugt weniger als 10 mol-%, betragen.

Die Menge an $H_2S$ kann am Ende der Reaktion bezüglich der molaren Menge an eingesetztem Organosilan der Formel II weniger als 50 mol-%, bevorzugt weniger als 30 mol-%, besonders bevorzugt weniger als 20 mol-%, ganz besonders bevorzugt weniger als 10 mol-%, betragen.

Eine Minimierung der Menge an $H_2S$, die im Laufe der Reaktion frei wird, kann vorteilhaft sein.

Die verwendete Mischung aus entsprechendem (Halogenorganyl)alkyloxysilan und Additiven kann in Abhängigkeit von der verwendeten Apparatur und den gewünschten und zum Teil unabhängig voneinander beeinflußbaren Effekten, beispielsweise Selektivität der Reaktion, Dauer der Umsetzung, Reaktordurchsatz, Reaktion von (Halogenorganyl)alkyoxysilan und Schwefelungsreagenz miteinander, Wert von m, Reaktion von Alkalihydrogensulfid und Schwefel, dem Reaktormaterial oder der Prozeßabfolge, bereits vor der Zugabe der Schwefelungsreagenzien hergestellt werden.

Die verwendete Mischung aus Alkalihydrogensulfid, Schwefel, Alkalicarbonat und Additiven kann in Abhängigkeit von der verwendeten Apparatur und den gewünschten und zum Teil unabhängig voneinander beeinflußbaren Effekten bereits vor der Zugabe des Halogenorganyl(alkoxysilans) hergestellt werden.

Das (Halogenorganyl)alkoxysilan und die Additive können miteinander in beliebiger Reihenfolge, Weise, Temperatur und Zeitdauer vermischt werden und erst dann der Alkohol und Alkalihydrogensulfid, Schwefel und Alkalicarbonat gemeinsam oder nacheinander zugegeben werden.

Additive, Alkalihydrogensulfid, Schwefel und Alkalicarbonat und Alkohol können miteinander in beliebiger Reihenfolge, Weise, Temperatur und Zeitdauer vermischt werden und erst dann das (Halogenorganyl)-alkoxysilan zugegeben werden.

Das (Halogenorganyl)alkoxysilan, Alkalihydrogensulfid, Schwefel und Alkalicarbonat und Alkohol können miteinander in beliebiger Reihenfolge, Weise, Temperatur und Zeitdauer vermischt werden und erst dann Additive zugegeben werden.

Das (Halogenorganyl)alkoxysilan, Alkalihydrogensulfid, Schwefel und Alkalicarbonat und Additive können miteinander in beliebiger Reihenfolge, Weise, Temperatur und Zeitdauer vermischt werden und erst dann Alkohol zugegeben werden.

Alkalihydrogensulfid, Schwefel und Alkalicarbonat und Additve können miteinander in beliebiger Reihenfolge, Weise, Temperatur und Zeitdauer vermischt werden und erst dann der Alkohol und (Halogenorganyl)alkoxysilan gemeinsam oder nacheinander zugegeben werden.

Wasserhaltige Alkalihydrogensulfide können unabhängig voneinander dem Reaktionsgemisch vor und/oder während der Reaktion zugesetzt werden.

Die wasserhaltigen Alkalihydrogensulfide können unabhängig voneinander mit Schwefel oder $H_2S$ vermischt werden und dem Reaktionsgemisch vor, während oder am Ende der Reaktion zugesetzt werden.

Die Nebenproduktmenge kann weniger als 40 Gew.-%, bevorzugt weniger als 30 Gew.-%, besonders bevorzugt weniger als 20 Gew.-%, ganz besonders bevorzugt weniger als 15 Gew.-%, bezogen auf die Menge an Organosilan der Formel I, betragen.

Eines der Nebenprodukte kann Mercaptoorganyl(alkoxysilan) sein.

Der Gehalt an Mercaptoorganyl(alkoxysilan) kann weniger als 10 Gew.-%, bevorzugt weniger als 4 Gew.-%, besonders bevorzugt weniger als 2 Gew.-% und ganz besonders bevorzugt weniger als 1,5 Gew.-%, im Endprodukt betragen.

Die Menge an Mercaptoorganyl(alkoxysilan) kann durch 1H-NMR, 29Si-NMR, 13C-NMR oder Gaschromatografie bestimmt werden.

Die Bestimmung der Menge an Mercaptoorganyl(alkoxysilan) per Gaschromatografie mit Dodekan als internem Standard ist bevorzugt.

Die Resteduktmenge an Halogenorganyl(alkoxysilan) kann durch Wahl der Reaktionsbedingungen (zum Beispiel Reaktionsdauer und Temperatur) weniger als 15 Gew.-%, bevorzugt weniger als 10 Gew.-%, besonders bevorzugt weniger als 5 Gew.-%, ganz besonders bevorzugt weniger als 3 Gew.-%, betragen.

Die Resteduktmenge an Halogenorganyl(alkoxysilan) kann von 0,5 bis 5 Gew:-%, bevorzugt 1 bis 4 Gew.-%, besonders bevorzugt 1 bis 3 Gew.-% und ganz besonders bevorzugt von 1 bis 2 Gew.-%, betragen.

Die Resteduktmenge an Halogenorganyl(alkoxysilan) kann durch 1H-NMR, 29Si-NMR, 13C-NMR oder Gaschromatografie bestimmt werden.

Die Bestimmung der Resteduktmenge per Gaschromatografie mit Dodekan als internem Standard ist bevorzugt.

Die Resteduktmenge kann mit Gaschromatografie und in Anlehnung an "Standard test Method for Silanes Used in Rubber Formulations (Bis-(triethoxysilylpropyl)sulfanes): Characterization by Gas Chromatography (GC), D 6843 - 02" gemessen werden.

Vorteile des erfindungsgemäßen Verfahrens sind der hohe Umsatz bei guter Selektivität, Verzicht auf den Einsatz von festem Alkalisulfid-Hydrat und der geringe Einfluß der Alkalihydroxidmenge.

Beispiele:

GC-Analytik:

Die GC-Analytik der isolierten Rohprodukte wird auf einem Gaschromatographen (FID) mit Dodekan als internem Standard durchgeführt.

Die gaschromatografischen Untersuchungen der Beispiele werden durchgeführt, wie in "Standard test Method for Silanes Used in Rubber Formulations (Bis-(triethoxysilylpropyl)sulfanes): Characterization by Gas Chromatography (GC), D 6843 - 02" beschrieben.

HPLC-Analytik:

Die Methode zur HPLC-Messung ist beschrieben in "Luginsland, H-D., Reactivity of the Sulfur Functions of the Disulfane Silane TESPD and Tetrasulfane Silane TESPT, paper presented at the ACS Meeting, April 1999, Chicago".

Die mittlere Schwefelkettenlänge wird folgendermaßen berechnet:

*m* = mittlere Schwefelkettenlänge
i = Anzahl der Schwefelatome in der Silankomponente
$M_i$ = Molare Masse der Silankomponente mit i Schwefelatomen
$A_i$ = Fläche des Signals der Silankomponente mit i Schwefelatomen
$R_i$ = Responsefaktor der Schwefelsilankomponente mit i Schwefelatomen

Falls Organosilane der Formel I Verbindungen mit $S_1$ enthalten, dann wird die mittlere Schwefelkettenlänge unter Berücksichtigung der Molekulargewichte korrigiert.

$^{29}$Si-NMR:

Die Si-Spektren werden an einem Bruker Avance 500-NMR-Spektrometer mit einer Messfrequenz für Si von 99,35 MHz (H-NMR 500,13 MHz) aufgenommen. Die Spektren werden intern gegen Tetramethylsilan (TMS = 0 ppm) referenziert. Die Proben werden als ca. 30% Lösung in $CDCl_3$ unter Zugabe von Chromacetylacetonat (ca. 0,05 bis 0,1 molare Lösung) als Relaxationsbeschleuniger vermessen. Als Pulssequenz wird eine invers gated Sequenz mit Protonenentkopplung nur während der Aquisitionszeit sowie einem Relaxationsdelay von 5s eingesetzt.

Beispiel 1:

In einen druckfesten Reaktor werden

50 kg NaSH-Hydrat der Firma ICS-Chemie Wolfen mit einer Reinheit von 69 +/- 1 Gew.-% (im Feststoff), 0,67 Gew.-% NaOH-Gehalt (in Lösung) und 25 Gew.-% Wassergehalt,

74,8 kg $Na_2CO_3$ der Firma Solvay mit einer Partikelverteilung (Median) laut Laserbeugung von 384 $\mu$m,

20 kg Schwefelpulver (Mahlschwefel) der Firma CS Additive mit einer Partikelverteilung (Median) laut Laserbeugung von 17 $\mu$m,

193 kg Ethanol und 34 kg Wasser miteinander vermischt.

In den Reaktor werden 269 kg 3-Chloropropyl(triethoxysilan) der Firma Evonik-Degussa GmbH (22 ppm hydrolisierbares Chlorid) innerhalb von 30 min bei 55°C so dosiert, dass entstehendes Gas nicht entweichen kann. Anschließend wird die Reaktionsmischung im geschlossenen Reaktor für 80 min bei 70-80°C und 130 min bei 70°C erhitzt. Im Anschluß an die Reaktion erfolgt die Lösungsmittelentfernung im Vakuum bei erhöhter Temperatur. In der ersten Stunde werden 11% und in der zweiten Stunde 21% des insgesamt isolierten Lösungsmittelgemisches im Vakuum entfernt. Die Salzentfernung erfolgt mit einer Zentrifuge. Es werden 242 kg flüssiges, klares Produkt isoliert.

Zusammensetzung:

| | |
|---|---|
| durchschnittliche S-Kettenlänge m (HPLC) | 2,17 |
| 3-Chlorpropyl(triethoxysilan) (GC) | 1,9 Gew.-% |
| 3-Mercaptopropyl(triethoxysilan) (GC) | 1,2 Gew.-% |
| $(EtO)_3Si-(CH_2)_3-S_2-(CH_2)_3-Si(OEt)_3$ (HPLC; S2-S10) | 83,4 % |
| $(EtO)_3Si-(CH_2)_3-S_3-(CH_2)_3-Si(OEt)_3$ (HPLC; S2-S10) | 15,4 % |

**Beispiel 2:**

In einen druckfesten Reaktor werden 85,6 g NaSH-Lösung der Firma Akzo Nobel mit einem NaSH-Anteil von 45,5 Gew.-%,
75 g $Na_2CO_3$ der Firma Merck mit einer Partikelgrößenverteilung (Median) laut Laserbeugung von 360 $\mu$m,

57,1 g Schwefelpellets der Firma Kemmax mit einer Partikelgrößenverteilung (Median) von >1 mm,
153 g Ethanol und 17 g Wasser miteinander vermischt.

In den Reaktor werden 330 g 3-Chloropropyl(triethoxysilan) der Firma Evonik-Degussa GmbH (102 ppm hydrolisierbares Chlorid) innerhalb von 60 min bei 65-75°C so dosiert, dass entstehendes Gas nicht entweichen kann. Anschließend wird die Reaktionsmischung im geschlossenen Reaktor für 150 min bei 75°C erhitzt. Im Anschluß an die Reaktion erfolgt die Lösungsmittelentfernung im Vakuum bei 105°C innerhalb von 3 h. Das Salz wird nach beendigter Lösungsmittelabtrennung durch Filtration entfernt. Es werden 212,4 g flüssiges, klares Produkt isoliert. Durch Waschen des Salzes mit Lösungsmittel und anschließende Aufarbeitung können weitere 86,3 g Produkt isoliert werden.

Zusammensetzung des isolierten Produktes:

| | |
|---|---|
| durchschnittliche S-Kettenlänge m (HPLC; S2-S10) | 3,73 |
| 3-Chlorpropyl(triethoxysilan) (GC) | <0,5 Gew.-% |
| 3-Mercaptopropyl(triethoxysilan) (GC) | 0,75 Ges.-% |
| $(EtO)_3Si-(CH_2)_3-S_2-(CH_2)_3-Si(OEt)_3$ (HPLC; S2-S10) | 18,9 % |
| $(EtO)_3Si-(CH_2)_3-S_3-(CH_2)_3-Si(OEt)_3$ (HPLC; S2-S10) | 28,7 % |
| $(EtO)_3Si-(CH_2)_3-S_4-(CH_2)_3-Si(OEt)_3$ (HPLC; S2-S10) | 23,4 % |

**Beispiel 3:**

In einen druckfesten Reaktor werden 96 g NaSH-Lösung der Firma Akzo Nobel mit einem NaSH-Anteil von 45,5 Gew.-%,
75 g $Na_2CO_3$ der Firma Merck mit einer Partikelgrößenverteilung (Median) laut Laserbeugung von 360 μm,
29,1 g Schwefelpellets der Firma Kemmax mit einer Partikelgrößenverteilung (Median) von >1 mm,
150 g Ethanol und 20 g Wasser miteinander vermischt.

In den Reaktor werden 300 g 3-Chloropropyl(triethoxysilan) der Firma Evonik-Degussa GmbH (102 ppm hydrolisierbares Chlorid) innerhalb von 60 min bei 65-75°C so dosiert, dass entstehendes Gas nicht entweichen kann. Anschließend wird die Reaktionsmischung im geschlossenen Reaktor für 180 min bei 75°C erhitzt. Im Anschluß an die Reaktion erfolgt die Lösungsmittelentfernung im Vakuum bei 105°C innerhalb von 3 h, wobei der Druck für 60 min Normaldruck, für 60 min 860 mbar und für 60 min 80 mbar betrug. Das Salz wird nach beendigter Lösungsmittelabtrennung durch Filtration entfernt. Es werden inklusive des Waschens des Salzes mit 3 x 200 ml Lösungsmittel plus Destillation desselben in Summe 300,1 g flüssiges, klares Produkt isoliert.

Zusammensetzung des isolierten Produktes:

| | |
|---|---|
| durchschnittliche S-Kettenlänge m (HPLC; S2-S10) | 2,44 |
| 3-Chlorpropyl(triethoxysilan) (GC) | 0,6 Gew.-% |
| 3-Mercaptopropyl(triethoxysilan) (GC) | 0,76 Gew.-% |
| $(EtO)_3Si-(CH_2)_3-S_2-(CH_2)_3-Si(OEt)_3$ (HPLC; S2-S10) | 62,8 % |
| $(EtO)_3Si-(CH_2)_3-S_3-(CH_2)_3-Si(OEt)_3$ (HPLC; S2-S10) | 29,5 % |
| $(EtO)_3Si-(CH_2)_3-S_4-(CH_2)_3-Si(OEt)_3$ (HPLC; S2-S10) | 6,5 % |

**Beispiel 4:**

In einen druckfesten Reaktor werden 55 g NaSH der Firma ICS mit einem NaSH-Anteil von 71 Gew.-%,
75 g $Na_2CO_3$ der Firma Merck,
21,9 g Schwefelpulver (Mahlschwefel) mit einer Partikelgrößenverteilung (Median) von 41 μm laut Laserbeugung,
128 g Ethanol und 32 g Wasser miteinander vermischt.

In den Reaktor werden 300 g 3-Chloropropyl(triethoxysilan) der Firma Evonik-Degussa GmbH (42 ppm hydrolisierbares Chlorid) innerhalb von 7 min bei 70°C so dosiert, dass entstehendes Gas nicht entweichen kann. Anschließend wird die Reaktionsmischung im geschlossenen Reaktor für 145 min bei 80°C erhitzt.

Im Anschluß wird der Innendruck bei 50°C mit gasförmigen $CO_2$ (Aldrich) auf 2,5 bar erhöht und die Suspension für 10 min unter Druckabschluß gerührt.

Der Überdruck wird anschließend abgelassen und die Suspension filtriert. Zum Filtrat werden 30 g Wasser

gegeben, die Mischung für weitere 15 min gerührt und die beiden flüssigen Phasen dann voneinander getrennt.

Die organische Phase wird bei 95°C von Lösungsmittelresten befreit und dabei 190,9 g flüssiges klares Produkt isoliert. Aus dem Salz ließen sich durch Waschen mit 200 g Lösungsmittel weitere 70 g Produkt gewinnen. Die Handlingsverluste und Produktreste auf dem Salz bei diesem Versuch werden auf ca. 25 g geschätzt.

Zusammensetzung des isolierten Produktes:

| | |
|---|---|
| durchschnittliche S-Kettenlänge m (HPLC; S2-S10) | 2,24 |
| 3-Chlorpropyl(triethoxysilan) (GC) | 2 Gew.-% |
| $(EtO)_3Si-(CH_2)_3-S_2-(CH_2)_3-Si(OEt)_3$ (HPLC; S2-S10) | 77,1 % |
| $(EtO)_3Si-(CH_2)_3-S_3-(CH_2)_3-Si(OEt)_3$ (HPLC; S2-S10) | 20,5 % |
| $(EtO)_3Si-(CH_2)_3-S_3-(CH_2)_3-Si(OEt)_3$ (HPLC; S2-S10) | 2,3 % |

**Beispiel 5:**

In einen druckfesten Reaktor werden 85,6 g wässrige NaSH-Lösung der Firma Akzo Nobel mit einem NaSH-Anteil von 45,5 Gew.-%,
75 g $Na_2CO_3$ der Firma BASF,
57,1 g Schwefelpellets der Firma Kemmax mit einer Partikelgrößenverteilung (Median) von >1 mm,
146,2 g Ethanol und 23,8 g Wasser miteinander vermischt.

In den Reaktor werden 330 g 3-Chloropropyl(triethoxysilan) der Firma Evonik-Degussa GmbH (102 ppm hydrolisierbares Chlorid) innerhalb von 60 min bei 65-75°C so dosiert, dass entstehendes Gas nicht entweichen kann. Anschließend wird die Reaktionsmischung im geschlossenen Reaktor für 150 min bei 75°C erhitzt.

Der Überdruck wird anschließend abgelassen und die Suspension filtriert. Die beiden erhaltenen flüssigen Phasen werden voneinander getrennt. Das Salz wird mit 170 g Ethanol (15% Wassergehalt) gewaschen und das Filtrat mit der flüssigen organischen Phase anschließend vereinigt.

Die vereinigten organischen Phasen werden bei 40°C/20 mbar von Lösungsmittelresten befreit und dabei 335,8 g flüssiges Produkt isoliert.

Vom Salz konnten durch Extraktion weiteres Produkt isoliert werden.

Zusammensetzung des isolierten Produktes:

| | |
|---|---|
| durchschnittliche S-Kettenlänge m (HPLC; S2-S10) | 3,62 |
| 3-Chlorpropyl(triethoxysilan) (GC) | 0,7 Gew.-% |
| 3-Mercaptopropyl(triethoxysilan) (GC) | 0,8 Gew.-% |
| $(EtO)_3Si-(CH_2)_3-S_2-(CH_2)_3-Si(OEt)_3$ (HPLC; S2-S10) | 17,8 % |
| $(EtO)_3Si-(CH_2)_3-S_3-(CH_2)_3-Si(OEt)_3$ (HPLC; S2-S10) | 20,5 % |
| $(EtO)_3Si-(CH_2)_3-S_4-(CH_2)_3-Si(OEt)_3$ (HPLC; S2-S10) | 2,3 % |

## Patentansprüche

1. Verfahren zur Herstellung von Organosilanen der allgemeinen Formel I,

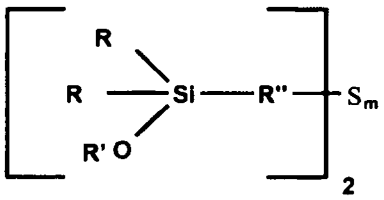

I

wobei

R gleich oder verschieden und eine $C_1$-$C_8$ -Alkyl-, $C_1$-$C_8$ -Alkenyl-, $C_1$-$C_8$ -Aryl-, $C_1$-$C_8$ -Aralkylgruppe oder eine OR' Gruppe ist,
R' gleich oder verschieden und eine $C_1$-$C_{24}$ - verzweigte oder unverzweigte einbindige Alkyl- oder Alkenyl-Gruppe, eine Arylgruppe, eine Aralkylgruppe, ein Wasserstoff, eine Alkylethergruppe - $(CR^{III}_2)_{y'}$-O-Alk, mit y' = 1-20, oder eine Alkylpolyethergruppe -$(CR^{III}_2O)_y$-Alk oder -$(CR^{III}CR^{III}2\text{-}O)_y$-Alk, mit y = 2-20, $R^{III}$ unabhängig voneinander H oder eine Alkylgruppe ist und Alk eine verzweigte oder unverzweigte, gesättigte oder ungesättigte, aliphatische, aromatische oder gemischt aliphatische /aromatische einbindige $C_1$-$C_{30}$ - Kohlenwasserstoffgruppe ist, ist,
R" eine verzweigte oder unverzweigte, gesättigte oder ungesättigte, aliphatische, aromatische oder gemischt aliphatische /aromatische zweibindige $C_1$-$C_{30}$ Kohlenwasserstoffgruppe, die gegebenenfalls mit F-, Cl-, Br-, I-, HS-, $NH_2$-, oder NHR' substituiert ist, ist,
m eine mittlere Schwefelkettenlänge von 1,5 bis 4,5 ist,

durch Umsetzung von (Halogenorganyl)alkoxysilan der Formel II,

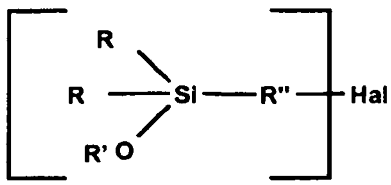

II

wobei R, R' und R" die oben angegebenen Bedeutungen haben und Hal Chlor, Brom, Fluor oder Iod ist, mit wasserhaltigem Alkalihydrogensulfid, Schwefel und Alkalicarbonat in Alkohol, **dadurch gekennzeichnet, dass** das molare Verhältnis (Halogenorganyl)alkoxysilan der Formel II zu Alkalihydrogensulfid zwischen 1:0,45 und 1:0,75 ist und das molare Verhältnis Alkalihydrogensulfid zu Alkalicarbonat zwischen 1:0,5 und 1:1,5 ist.

2. Verfahren zur Herstellung von Organosilanen nach Anspruch 1, **dadurch gekennzeichnet, dass** man vor, während oder nach der Reaktion Additive zugibt.

3. Verfahren zur Herstellung von Organosilanen nach Anspruch 2, **dadurch gekennzeichnet, dass** die Additive nichtalkoholische Lösungsmittel oder polare, protische, aprotische, basische oder saure Additive sind.

4. Verfahren zur Herstellung von Organosilanen nach Anspruch 1 bis 3, **dadurch gekennzeichnet, dass** man aus der Rohproduktsuspension ein Alkohol-/Wasser-Gemisch entfernt und das gebildete Produkt der allgemeinen Formel I anschließend von dem Feststoff abtrennt.

5. Verfahren zur Herstellung von Organosilanen nach Anspruch 1 bis 3, **dadurch gekennzeichnet, dass** man aus der Rohproduktsuspension den Feststoff abtrennt und anschließend ein Alkohol-/Wasser-Gemisch vom gebildeten Produkt der allgemeinen Formel I abtrennt.

6. Verfahren zur Herstellung von Organosilanen nach Anspruch 5, **dadurch gekennzeichnet, dass** man ein Alkohol-/Wasser-Gemisch vom gebildeten Produkt der allgemeinen Formel I durch Destillation abtrennt.

7. Verfahren zur Herstellung von Organosilanen nach Anspruch 5, **dadurch gekennzeichnet, dass** man ein Alkohol-/Wasser-Gemisch vom gebildeten Produkt der allgemeinen Formel I durch Phasenseparation abtrennt.

8. Verfahren zur Herstellung von Organosilanen nach Anspruch 1 bis 3, **dadurch gekennzeichnet**, das man aus der Rohproduktsuspension ein Alkohol-/Wasser-Gemisch entfernt, und die verbleibende Rohproduktsuspension, enthaltend die Organosiliciumverbindung der allgemeinen Formel (I) und Alkalihalogenid, mit Wasser mischt und die sich bildenden Phasen trennt.

## Claims

1. Process for preparing organosilanes of the general formula I

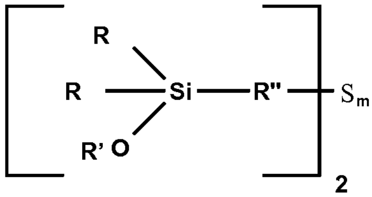

I

where

R is the same or different and is a $C_1$-$C_8$-alkyl, $C_1$-$C_8$-alkenyl, $C_1$-$C_8$-aryl or $C_1$-$C_8$-aralkyl group or an OR' group, R' is the same or different and is a $C_1$-$C_{24}$ branched or unbranched monovalent alkyl or alkenyl group, an aryl group, an aralkyl group, hydrogen, an alkyl ether group - $(CR^{III}_2)_y$-O-Alk, where y' = 1-20, or an alkyl polyether group - $(CR^{III}{}_{20})_y$-Alk or -$(CR^{III}_2$-$CR^{III}_2$-$O)_y$-Alk, where y = 2-20, $R^{III}$ is independently H or an alkyl group and Alk is a branched or unbranched, saturated or unsaturated, aliphatic, aromatic or mixed aliphatic/aromatic monovalent $C_1$-$C_{30}$ hydrocarbon group,
R" is a branched or unbranched, saturated or unsaturated, aliphatic, aromatic or mixed aliphatic/aromatic divalent $C_1$-$C_{30}$ hydrocarbon group which is optionally substituted by F, Cl, Br, I, HS, $NH_2$ or NHR',
m is a mean sulphur chain length of 1.5 to 4.5,

by reacting (haloorganyl)alkoxysilane of the formula II

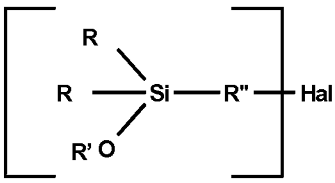

II

where R, R' and R" are each as defined above and Hal is chlorine, bromine, fluorine or iodine, with hydrous alkali metal hydrogensulphide, sulphur and alkali metal carbonate in alcohol, **characterized in that** the molar (haloorganyl)alkoxysilane of the formula II to alkali metal hydrogensulphide ratio is between 1:0.45 and 1:0.75, and the molar alkali metal hydrogensulphide to alkali metal carbonate ratio is between 1:0.5 and 1:1.5.

**2.** Process for preparing organosilanes according to Claim 1, **characterized in that** additives are added before, during or after the reaction.

**3.** Process for preparing organosilanes according to Claim 2, **characterized in that** the additives are nonalcoholic solvents or polar, protic, aprotic, basic or acidic additives.

**4.** Process for preparing organosilanes according to Claims 1 to 3, **characterized in that** an alcohol/water mixture is removed from the crude product suspension and the product of the general formula I formed is then removed from the solids.

**5.** Process for preparing organosilanes according to Claims 1 to 3, **characterized in that** the solids are removed from the crude product suspension and then an alcohol/water mixture is removed from the product of the general formula I formed.

**6.** Process for preparing organosilanes according to Claim 5, **characterized in that** an alcohol/water mixture is removed from the product of the general formula I formed by distillation.

**7.** Process for preparing organosilanes according to Claim 5, **characterized in that** an alcohol/water mixture is removed from the product of the general formula I formed by phase separation.

**8.** Process for preparing organosilanes according to Claims 1 to 3, **characterized in that** an alcohol/water mixture is removed from the crude product suspension, and the remaining crude product suspension comprising the organosilicon compound of the general formula (I) and alkali metal halide is mixed with water and the phases which form are separated.

## Revendications

**1.** Procédé pour la préparation d'organosilanes de formule générale I,

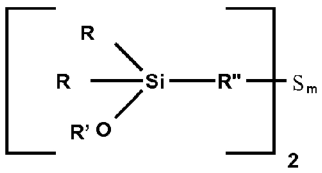

I

dans laquelle

R peut être le même ou différent et est un groupe alkyle en $C_1$-$C_8$, alcényle en $C_1$-$C_8$, aryle en $C_1$-$C_8$, aralkyle en $C_1$-$C_8$ ou un groupe OR',
R' peut être le même ou différent et est un groupe alkyle ou alcényle en $C_1$-$C_{24}$ à une liaison, ramifié ou non ramifié, un groupe aryle, un groupe aralkyle, un atome d'hydrogène, un groupe alkyléther $-(CR^{III}_2)_{y'}$-O-Alk, où y' = 1-20, ou un groupe alkylpolyéther $-(CR^{III}_2O)_y$-Alk ou $-(CR^{III}_2-CR^{III}_2-O)_y$-Alk, où y = 2-20, $R^{III}$, chaque fois indépendamment, est H ou un groupe alkyle et Alk est un groupe hydrocarboné en $C_1$-$C_{30}$ à une liaison, ramifié ou non ramifié, saturé ou insaturé, aliphatique, aromatique ou aliphatique/aromatique mixte,
R" est un groupe hydrocarboné en $C_1$-$C_{30}$ à deux liaisons, ramifié ou non ramifié, saturé ou insaturé, aliphatique, aromatique ou aliphatique/aromatique mixte, qui est éventuellement substitué par F-, Cl-, Br-, I-, HS-, $NH_2$- ou NHR',
m est une longueur moyenne de chaîne soufrée de 1,5 à 4,5,

par mise en réaction d'un (halogéno-organyl)alcoxyilane de formule II,

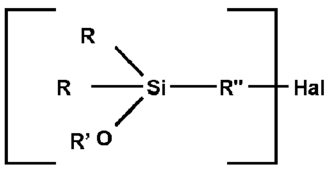

II

dans laquelle R, R' et R" ont les significations indiquées plus haut et Hal est le chlore, le brome, le fluor ou l'iode, avec un hydrogénosulfure alcalin aqueux, du soufre et un carbonate alcalin dans un alcool, **caractérisé en ce que** le rapport molaire de l'(halogéno-organyl)alcoxysilane de formule II à l'hydrogénosulfure alcalin est compris entre 1:0,45 et 1:0,75 et le rapport molaire de l'hydrogénosulfure alcalin au carbonate alcalin est compris entre 1:0,5 et 1:1,5.

**2.** Procédé pour la préparation d'organosilanes selon la revendication 1, **caractérisé en ce que** qu'avant, pendant ou après la réaction on ajoute des additifs.

**3.** Procédé pour la préparation d'organosilanes selon la revendication 2, **caractérisé en ce que** les additifs sont des solvants non alcooliques ou des additifs polaires, protiques, aprotiques, basiques ou acides.

**4.** Procédé pour la préparation d'organosilanes selon l'une quelconque des revendications 1 à 3, **caractérisé en ce qu'**on élimine de la suspension de produit brut un mélange d'alcool/eau et ensuite on sépare du solide le produit formé de formule générale I.

**5.** Procédé pour la préparation d'organosilanes selon l'une quelconque des revendications 1 à 3, **caractérisé en ce qu'**on sépare le solide de la suspension de produit brut et ensuite on sépare un mélange d'alcool/eau d'avec le produit formé de formule générale I.

6. Procédé pour la préparation d'organosilanes selon la revendication 5, **caractérisé en ce qu'**on sépare par distillation un mélange d'alcool/eau d'avec le produit formé de formule générale I.

7. Procédé pour la préparation d'organosilanes selon la revendication 5, **caractérisé en ce qu'**on sépare par séparation de phases un mélange d'alcool/eau d'avec le produit formé de formule générale I.

8. Procédé pour la préparation d'organosilanes selon l'une quelconque des revendications 1 à 3, **caractérisé en ce qu'**on élimine de la suspension de produit brut un mélange d''alcool/eau, et on mélange avec de l'eau la suspension de produit brut restante, contenant le composé organosilicié de formule générale (I) et un halogénure alcalin et on sépare les phases formées.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1130023 A
- EP 1700861 A
- WO 2008025580 A1